(19)

Europäisches
Patentamt
European
Patent Office
Office européen
des brevets

(11) **EP 2 129 120 A1**

(12) **EUROPEAN PATENT APPLICATION**
published in accordance with Art. 153(4) EPC

(43) Date of publication:
**02.12.2009 Bulletin 2009/49**

(51) Int Cl.:
***H04N 7/173*** *(2006.01)*      ***H04N 5/91*** *(2006.01)*

(21) Application number: **08703600.0**

(22) Date of filing: **22.01.2008**

(86) International application number:
**PCT/JP2008/050750**

(87) International publication number:
**WO 2008/090859 (31.07.2008 Gazette 2008/31)**

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **22.01.2007 JP 2007011118
14.06.2007 JP 2007156972**

(71) Applicant: **Sony Corporation
Tokyo 108-0075 (JP)**

(72) Inventors:
• **TOKASHIKI, Mamoru
Tokyo 108-0075 (JP)**
• **NAGASAKA, Hideo
Tokyo 108-0075 (JP)**

(74) Representative: **Thévenet, Jean-Bruno et al
Cabinet Beau de Loménie
158, rue de l'Université
75340 Paris Cédex 07 (FR)**

(54) **INFORMATION PROCESSING DEVICE AND METHOD, AND PROGRAM**

(57)    The present invention relates to an information processing apparatus, an information processing method, and a program for making easier-to-understand evaluations of contents.

A reproduction control section 54 controls reproduction of a content which varies dynamically over a predetermined time period; a tag data reading section 55 reads tag information which has been stored beforehand and which represents tags to be attached to the content in response to designation by a user to attach the tags as a subjective evaluation of the user regarding the content being reproduced; a time code acquisition section 56 acquires time information indicating times into the content at which the attachment of the tags is designated by the user; and a storage section 32 stores the time information and the tag information in association with one another. This apparatus allows easier-to-understand evaluations to be made of contents. The present invention may be applied illustratively to content reproduction devices such as a mobile phone or a HDD recorders.

FIG. 2

**Description**

Technical Field

This present invention relates to an information processing apparatus, an information processing method, and a program. More particularly, the invention relates to an information processing apparatus, an information processing method, and a program for evaluating contents.

Background Art

In recent years, content reproduction devices including television sets and HDD (hard disk drive) recorders have been connected to networks such as the Internet, in such a manner that a plurality of content reproduction devices may reproduce or otherwise share the same content among them. In such an environment, users may be led to evaluate given contents with propositions to put the user's impressions into values and attach them to the evaluated contents.

For example, one proposition involves recording impression data along with musical composition data and, upon audio output, illuminating a light-emitting unit with an illumination color determined on the basis of the impression data associated with the musical composition data being output (e.g., see Patent Document 1).

According to that proposition, the users can easily recognize how well the currently reproduced musical composition data has been evaluated.

Patent Document 1: Japanese Patent Laid-Open No. 2006-317872

Disclosure of Invention

Technical Problem

However, the above-cited invention does not propose evaluating a specific part of the currently reproduced content or sharing information about a particular part of the content.

Thus, a recently made proposition involves attaching tags inside contents. More specifically, the proposition involves getting a user to attach tags to that part of the currently reproduced content which attracts the user's attention, so that the user's evaluation regarding the content may be shared by others over the network.

According to the above method, however, it is not clear exactly what kind of evaluation the user has made regarding the tagged part of the content.

The present invention has been made in view of the above circumstances and proposes allowing easier-to-understand evaluations to be carried out regarding contents.

Technical Solution

An information processing apparatus according to a first aspect of the present invention includes: reproduction controlling means for controlling reproduction of a content which varies dynamically over a predetermined time period; reading means for reading tag information which has been stored beforehand and which represents tags to be attached to the content in response to designation by a user to attach the tags as a subjective evaluation of the user regarding the content being reproduced; acquiring means for acquiring time information indicating times into the content at which the attachment of the tags is designated by the user; and storing means for storing the time information and the tag information in association with one another.

The tag information may be structured to include tag identification information for identifying the tag information, display information for displaying icons representing the subjective evaluation of the user, and audio information for giving audio output representing the subjective evaluation of the user; and the storing means may store the time information and the tag identification information as part of the tag information in association with one another.

The information processing apparatus may further include display controlling means for controlling display of a time base serving as reference to the times into the content being reproduced, the display controlling means further controlling display of the icons in those position on the time base which represent the times indicated by the time information, based on the time information and on the display information included in the tag information identified by the tag identification information.

The display controlling means may control the icon display in such a manner that if a plurality of identical icons are to be displayed close to one another, the closely displayed icons are replaced by another icon nearby which varies in size in proportion to the number of the replaced icons.

The information processing apparatus may further include audio output controlling means for controlling the audio output at the times indicated by the time information on the content being reproduced, based on the time information and on the audio information included in the tag information identified by the tag identification information.

The tag information may be structured to further include vibration pattern information indicating vibration patterns in which the information processing apparatus is vibrated; and the information processing apparatus may further include vibration controlling means for controlling generation of vibrations at the times indicated by the time information over the content being reproduced, based on the time information and on the vibration pattern information included in the tag information identified by the tag identification information.

The information processing apparatus may further include inputting means for inputting designation from the user operating the inputting means to attach any of the tags preselected by the user from the tags represented by the tag information, the attached tag being representative of the operation performed by the user.

An information processing method according to the first aspect of the present invention includes the steps of: controlling reproduction of a content which varies dynamically over a predetermined time period; reading tag information which has been stored beforehand and which represents tags to be attached to the content in response to designation by a user to attach the tags as a subjective evaluation of the user regarding the content being reproduced; acquiring time information indicating times into the content at which the attachment of the tags is designated by the user; and storing the time information and the tag information in association with one another.

A program according to the first aspect of the present invention includes the steps of: controlling reproduction of a content which varies dynamically over a predetermined time period; reading tag information which has been stored beforehand and which represents tags to be attached to the content in response to designation by a user to attach the tags as a subjective evaluation of the user regarding the content being reproduced; acquiring time information indicating times into the content at which the attachment of the tags is designated by the user; and controlling storing to store the time information and the tag information in association with one another.

According to the first aspect of the present invention, the reproduction of a content which varies dynamically over a predetermined time period is controlled; tag information is read which has been stored beforehand and which represents tags to be attached to the content in response to designation by a user to attach the tags as a subjective evaluation of the user regarding the content being reproduced; time information is acquired which indicates times into the content at which the attachment of the tags is designated by the user; and the time information and the tag information are stored in association with one another.

An information processing apparatus or a program according to a second aspect of the present invention includes: acquiring means for acquiring registration count information about the number of registration information including identification information and time information, the identification information being included in and making identification of tags which represent emotions and which are designated by a user to be registered as representative of the emotions regarding a content, the time information being indicative of times at which the user designates the registration of the tags; and display controlling means for controlling, based on the registration count information, display of icons expressing the emotions represented by the tags identified by the identification information; inside a display area defined by a first axis representing times and by a second axis representing the number of the registration information;

in positions defined by the positions on the first axis representing predetermined times and by the position on the second axis representing the number of the registration information having the same identification information; the information processing apparatus being implemented alternatively by a computer caused to function as such by a program according to the second aspect af the present invention.

The information processing apparatus may further include generating means for generating the registration information in accordance with the tag registration designated by the user; and the acquiring means may acquire the registration count information by generating the registration count information using the registration information generated by the generating means.

The acquiring means may acquire the registration count information from another apparatus, the acquired registration count information having been generated in accordance with the tag registration designated by another user.

The acquiring means may acquire the registration count information about the number of the registration information totaled for each of the identification information, the registration information having been generated in accordance with the tag registration designated by a plurality of other users.

The registration information may further include region information indicating the region in which the content subject to the tag registration is broadcast and channel information indicating the channel on which the content is broadcast; and the display controlling means may control, based on the registration count information, display of the icons expressing the emotions represented by the tags identified by the identification information; inside the display area; in the positions defined by the positions on the first axis representing the predetermined times and by the position on the second axis representing the number of the registration information having the same region information, the channel information and the identification information, from among the registration information having the time information indicating the times included in a predetermined unit time covering the predetermined times.

The content subject to the tag registration may be a television broadcast program.

An information processing method according to the second aspect of the present invention includes the steps of: acquiring registration count information about the number of registration information including identification information and time information, the identification information being included in and making identification of tags which represent emotions and which are designated by a user to be registered as representative of the emotions regarding a content, the time information being indicative of times at which the user designates the registration of the tags; and controlling, based on the registration count information, display of icons expressing the emotions represented by the tags identified by the identification information; inside a display area defined by a first axis representing times and by a second axis representing the number of the registration information; in positions defined by the positions on the first axis representing predetermined times and by the position on the second axis representing the number of the registration information having the same identification information.

According to the second aspect of the present invention, registration count information is acquired about the number of registration information including identification information and time information, the identification information being included in and making identification of tags which represent emotions and which are designated by a user to be registered as representative of the emotions regarding a content, the time information being indicative of times at which the user designates the registration of the tags; and based on the registration count information, control is exercised on the display of icons expressing the emotions represented by the tags identified by the identification information; inside a display area defined by a first axis representing times and by a second axis representing the number of the registration information; in positions defined by the positions on the first axis representing predetermined times and by the position on the second axis representing the number of the registration information having the same identification information from among the registration information having the time information indicating the times included in a predetermined unit time covering the predetermined times.

Advantageous Effects

According to the first and the second aspects of the present invention, as outlined above, contents may be evaluated. More particularly, according to the first and the second aspects of the present invention, contents may be evaluated in an easier-to-understand manner than before.

Brief Description of Drawings

[Fig. 1]

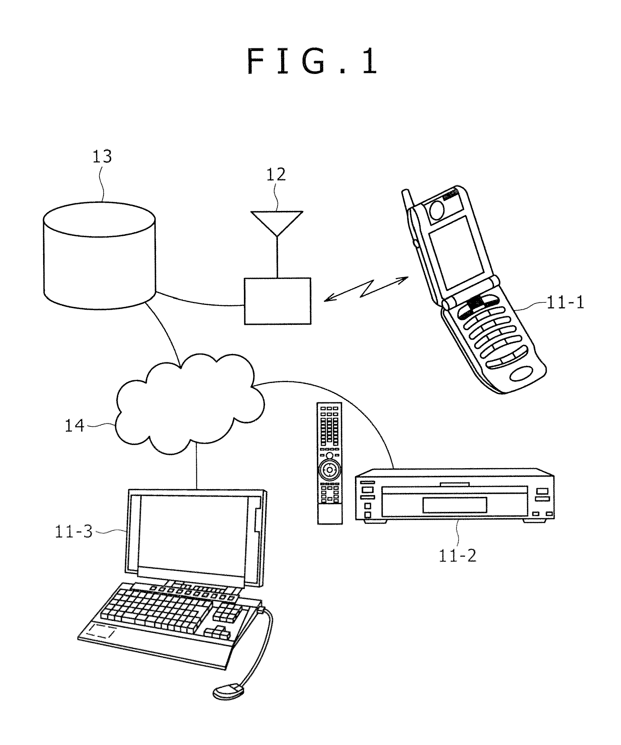

Fig. 1 is a view showing typical content reproduction devices implemented as an embodiment of the present invention.
[Fig. 2]

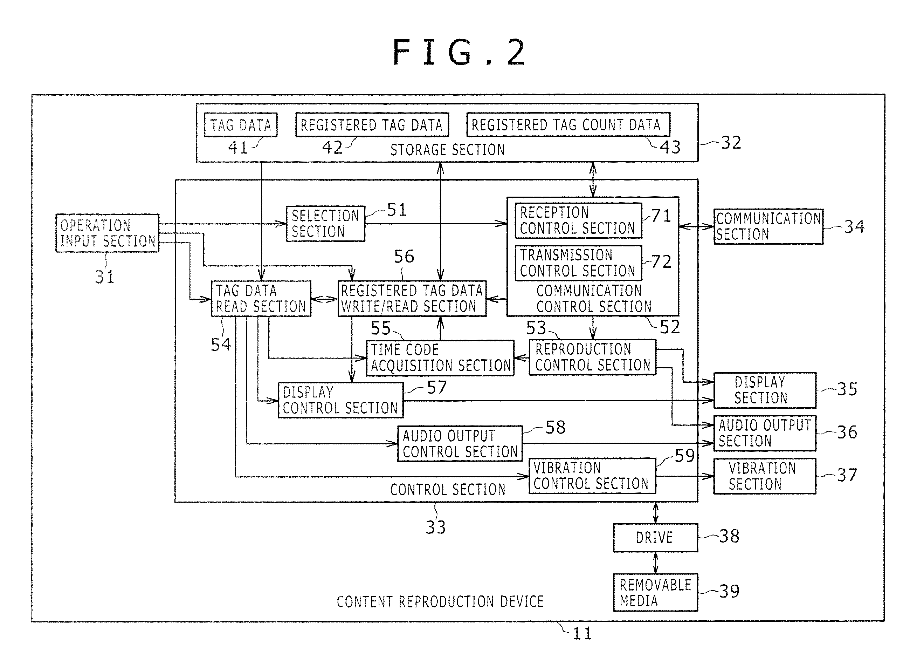

Fig. 2 is a block diagram showing a functional structure of a content reproduction device.
[Fig. 3]

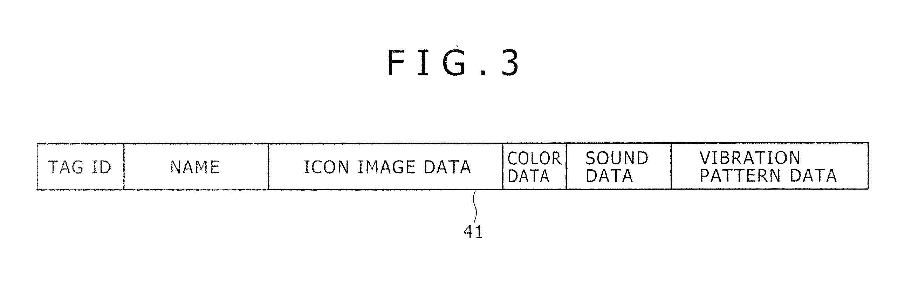

Fig. 3 is a view showing a structure of tag data.
[Fig. 4]

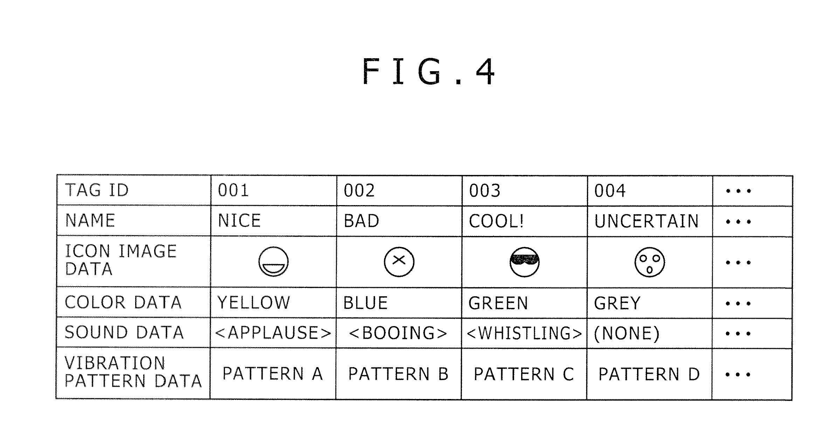

Fig. 4 is a view showing examples of tag data.
[Fig. 5]

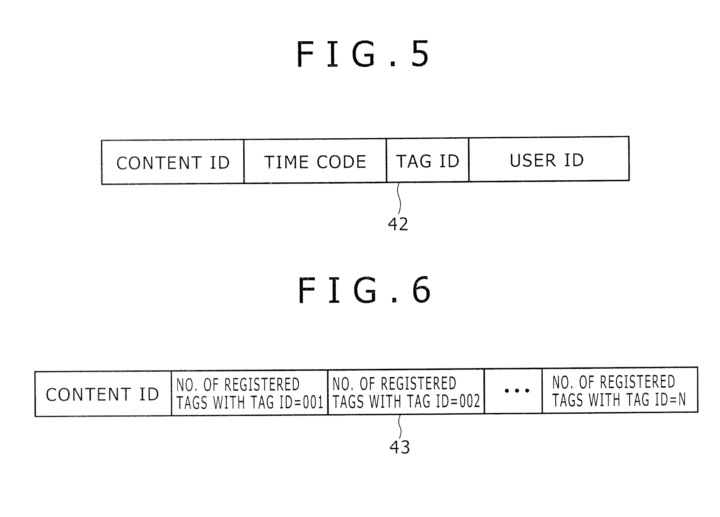

Fig. 5 is a view showing a structure of registered tag data.

[Fig. 6]
Fig. 6 is a view showing a structure of registered tag count data.
[Fig. 7]

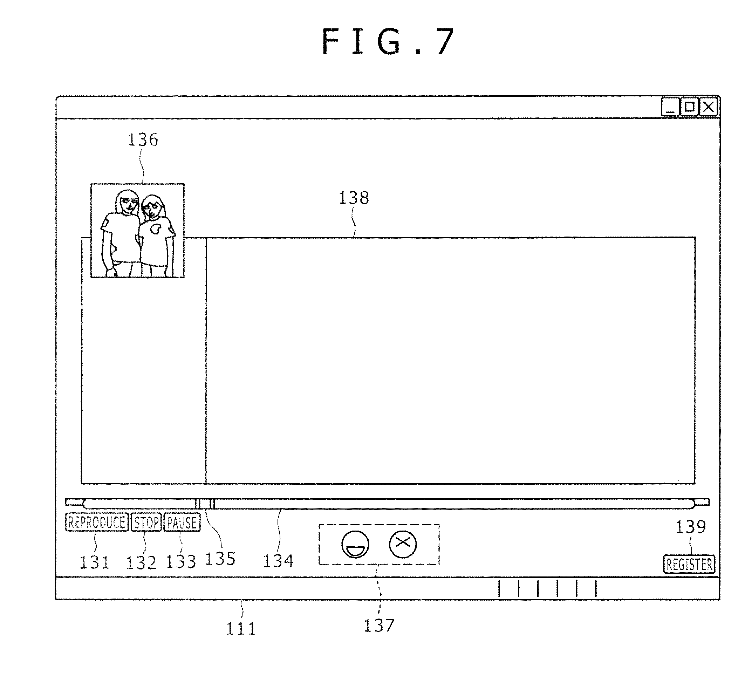

Fig. 7 is a view explanatory of a tag display window.
[Fig. 8]

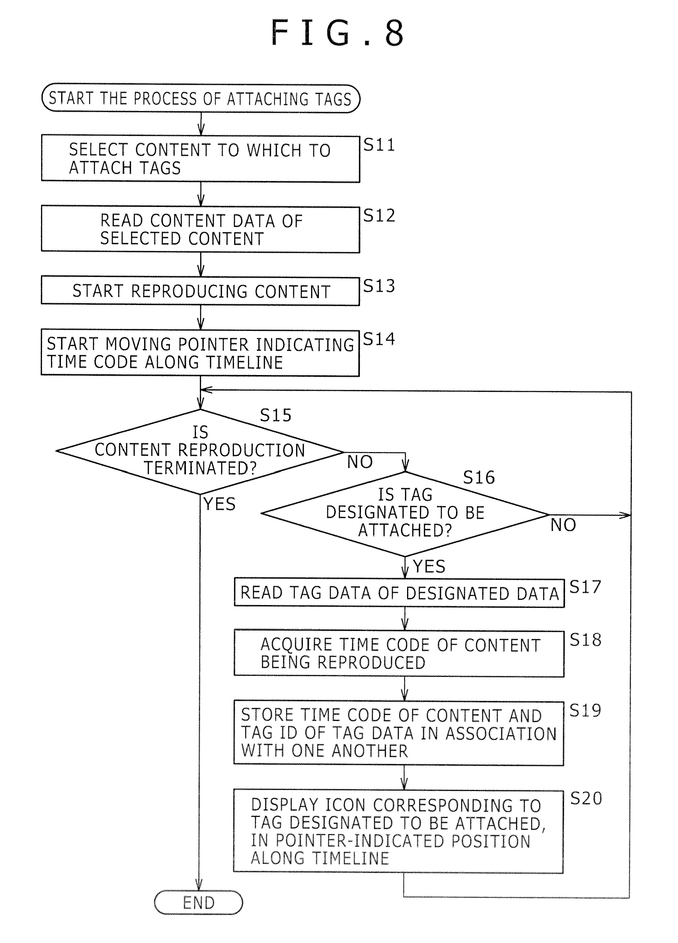

Fig. 8 is a flowchart showing a process of attaching tags.
[Fig. 9]

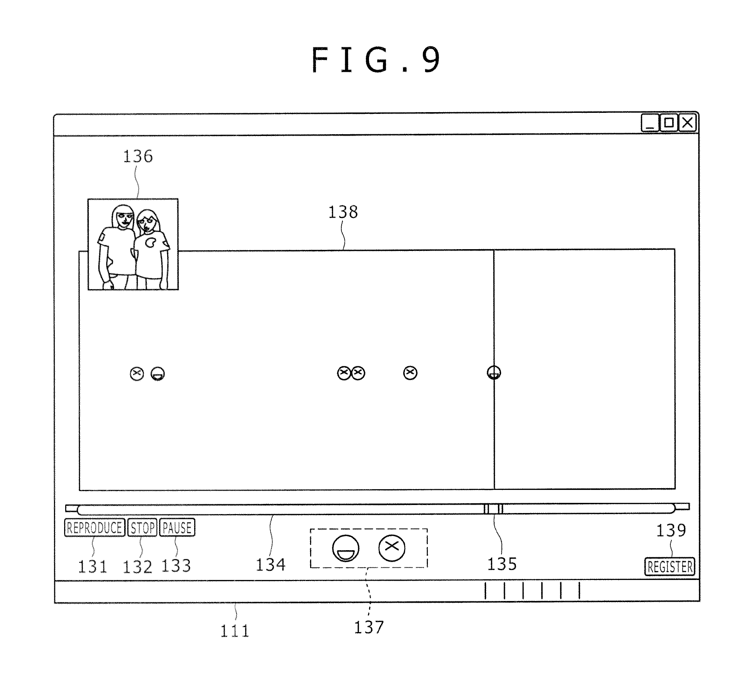

Fig. 9 is a view showing a tag display window in effect when the currently reproduced content has tags attached thereto.
[Fig. 10]

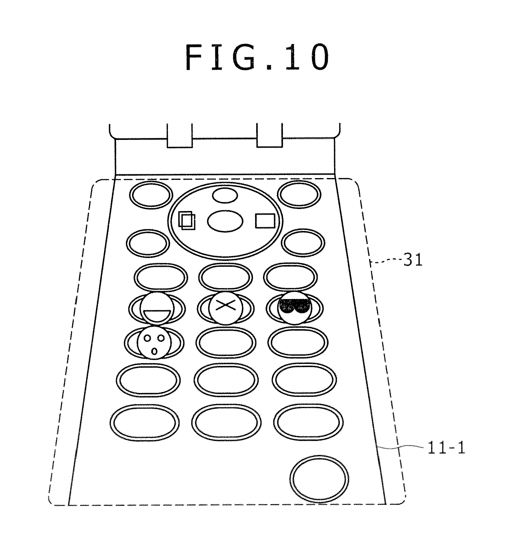

Fig. 10 is a view showing an operation input section of a mobile phone working as a content reproduction device.
[Fig. 11]

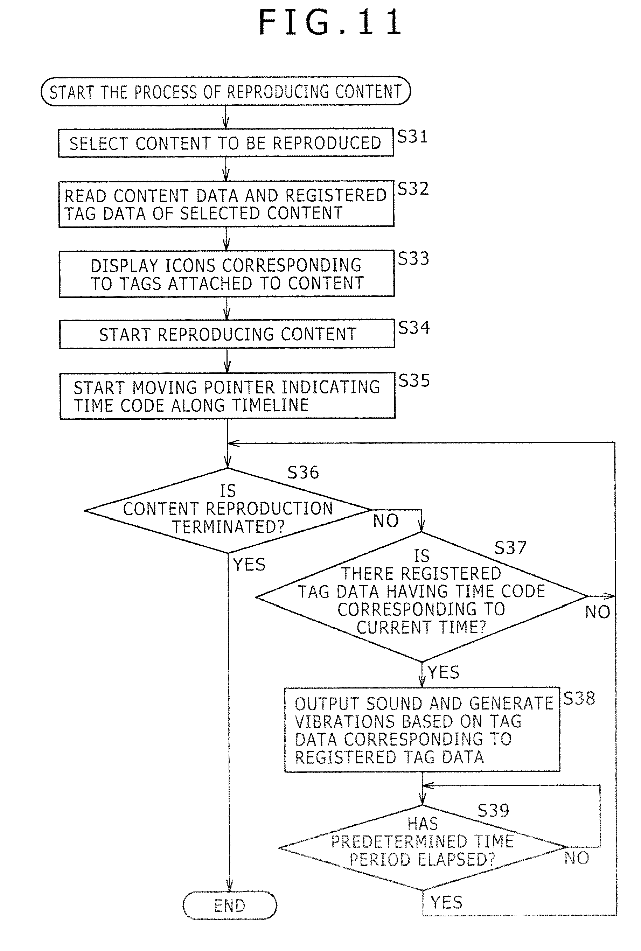

Fig. 11 is a flowchart showing a process of reproducing a content with tags attached thereto.
[Fig. 12]

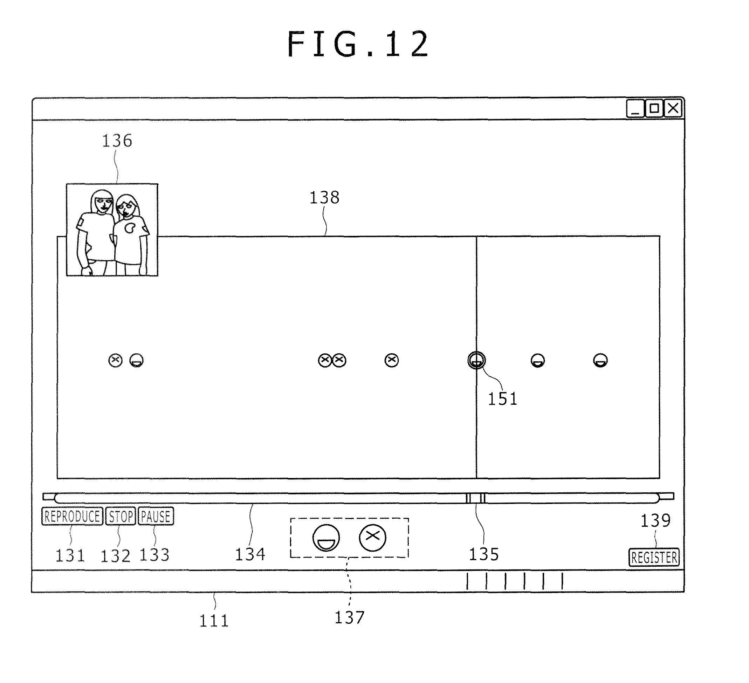

Fig. 12 is a view showing a typical icon displayed so as to distinguish the tags attached by this user from those attached by other users.
[Fig. 13]

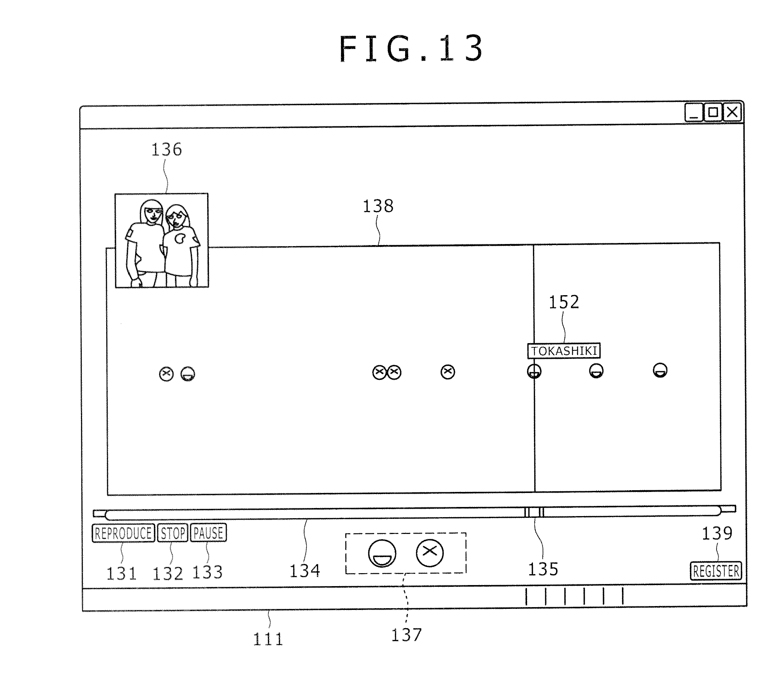

Fig. 13 is a view showing another typical icon displayed so as to distinguish the tags attached by this user from those attached by other users.
[Fig. 14]

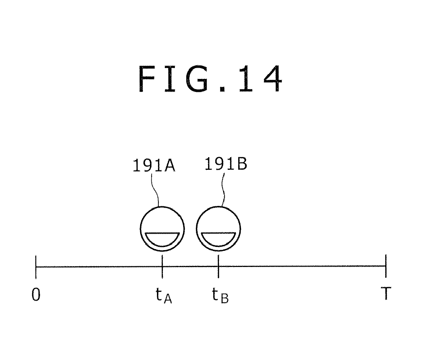

Fig. 14 is a view explanatory of how a plurality of identical icons arrayed close to one another are displayed.
[Fig. 15]

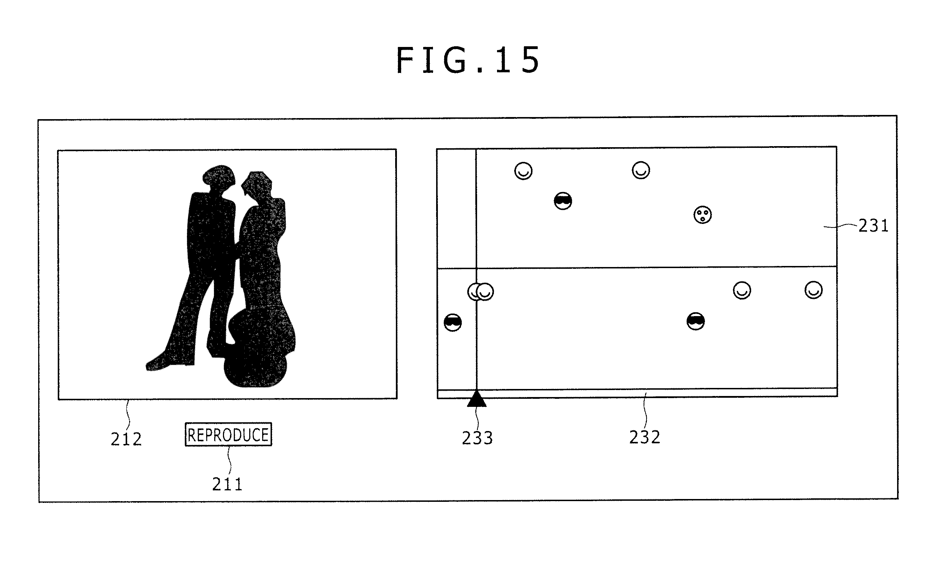

Fig. 15 is a view explanatory of how a moving picture and an icon display area are typically displayed.
[Fig. 16]

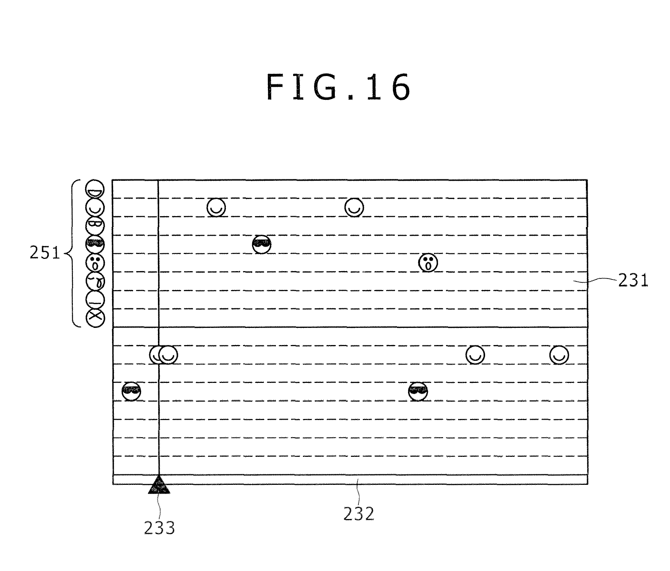

Fig. 16 is a view explanatory of a detailed display of the icon display area.
[Fig. 17]

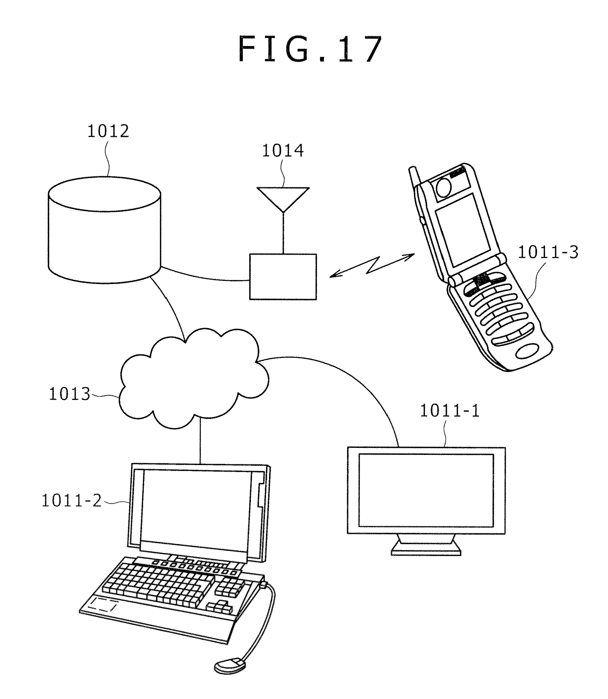

Fig. 17 is a view showing a typical structure of a tag registration system to which the present invention is applied.
[Fig. 18]

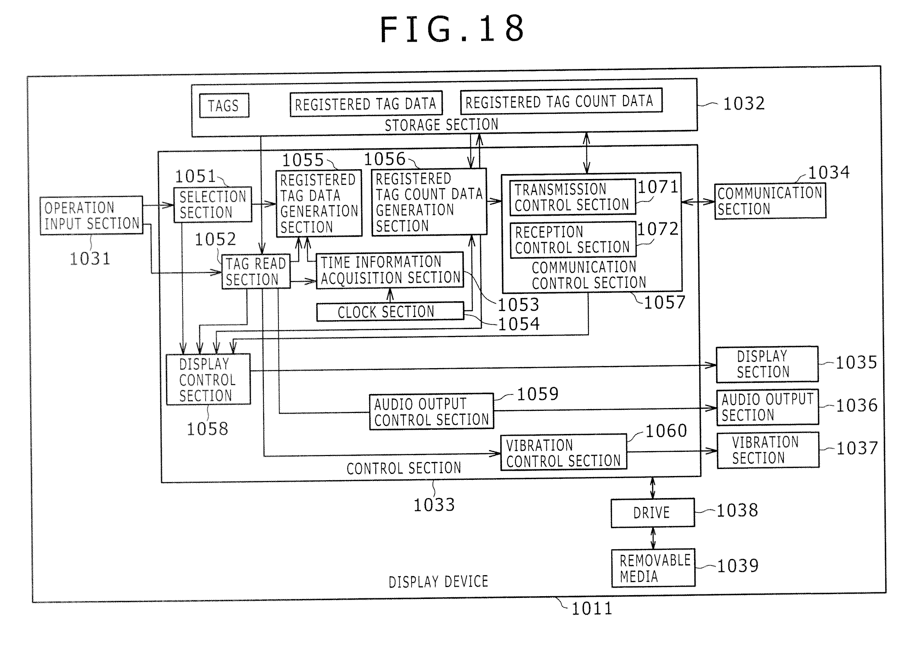

Fig. 18 is a block diagram showing a typical functional structure of a display device implemented as an embodiment of the present invention.
[Fig. 19]

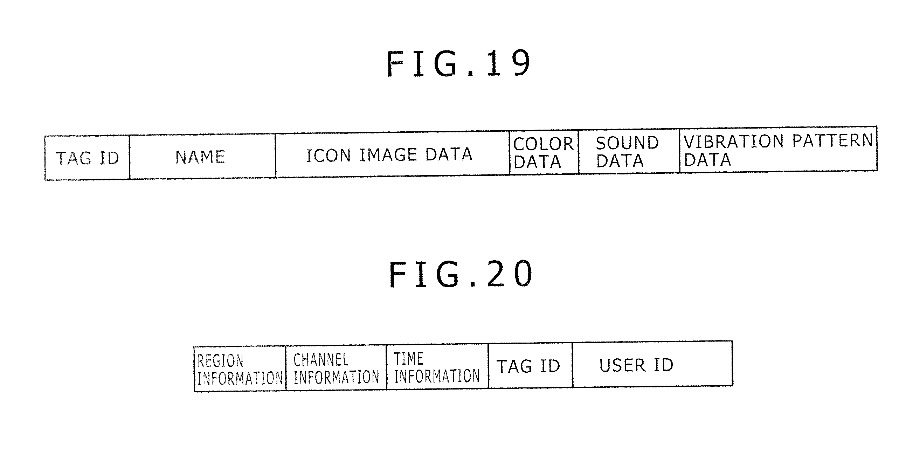

Fig. 19 is a view showing a tag structure.
[Fig. 20]
Fig. 20 is a view showing a structure of registered tag data.
[Fig. 21]

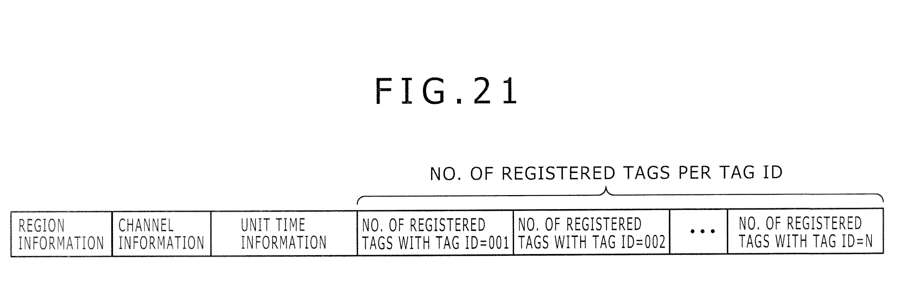

Fig. 21 is a view showing a structure of registered tag count data.
[Fig. 22]

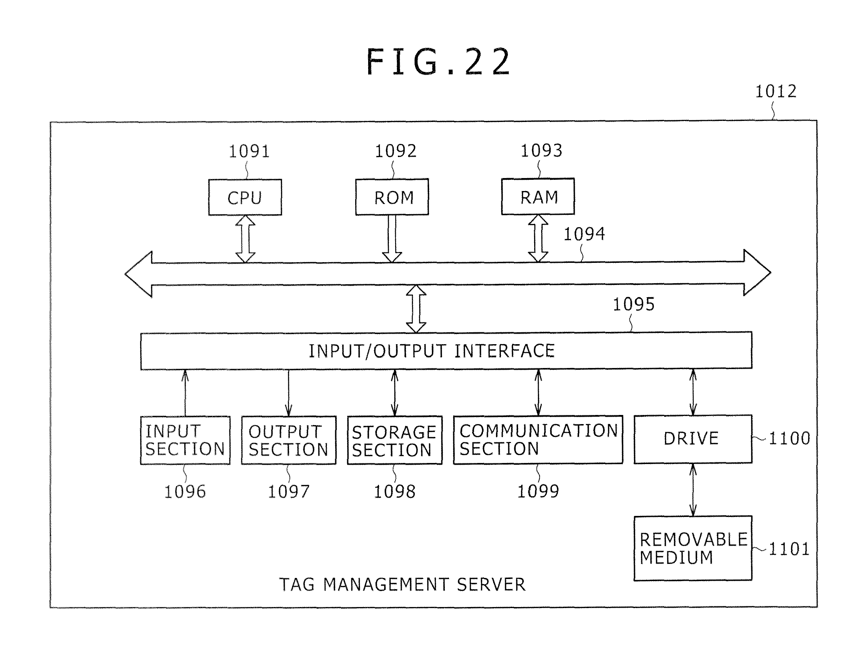

Fig. 22 is a block diagram showing a typical hardware structure of a tag management server.
[Fig. 23]

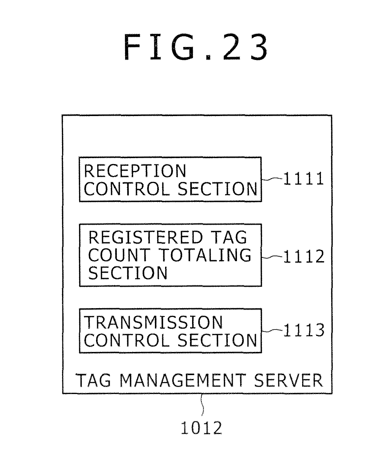

Fig. 23 is a block diagram showing a typical functional structure of the tag management server.
[Fig. 24]

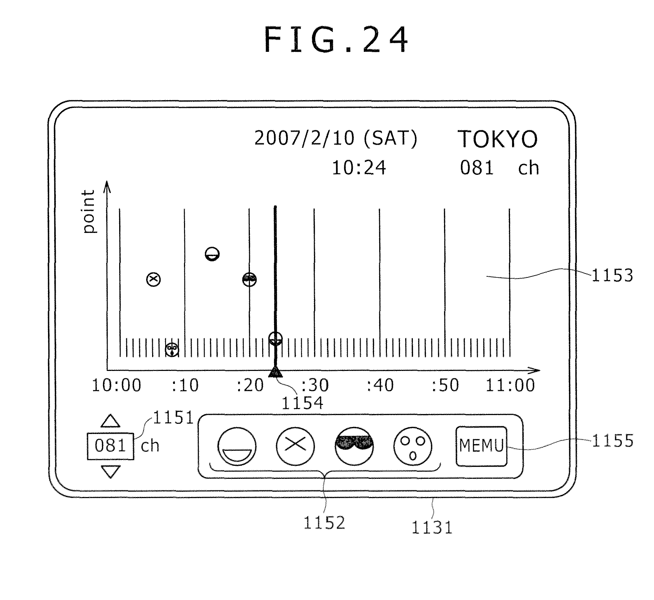

Fig. 24 is a view explanatory of a tag display window.
[Fig. 25]

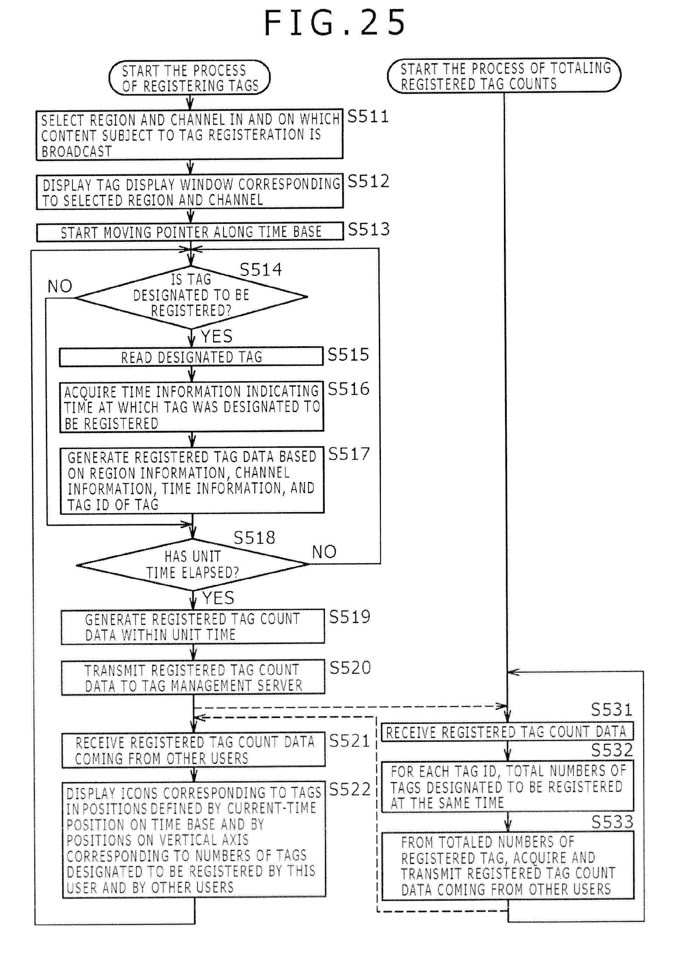

Fig. 25 is a flowchart showing a process of registering tags and a process of totaling registered tags.
[Fig. 26]

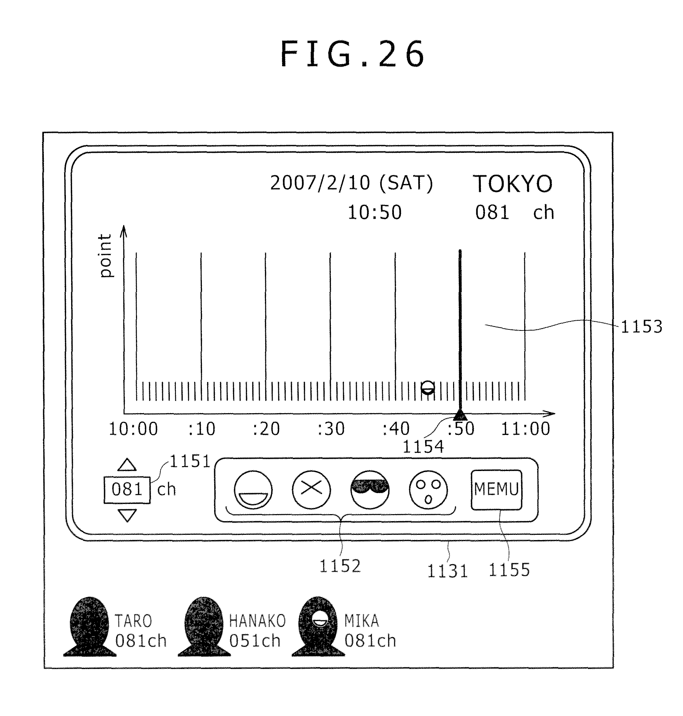

Fig. 26 is a view explanatory of a typical display in the tag display window.
[Fig. 27]

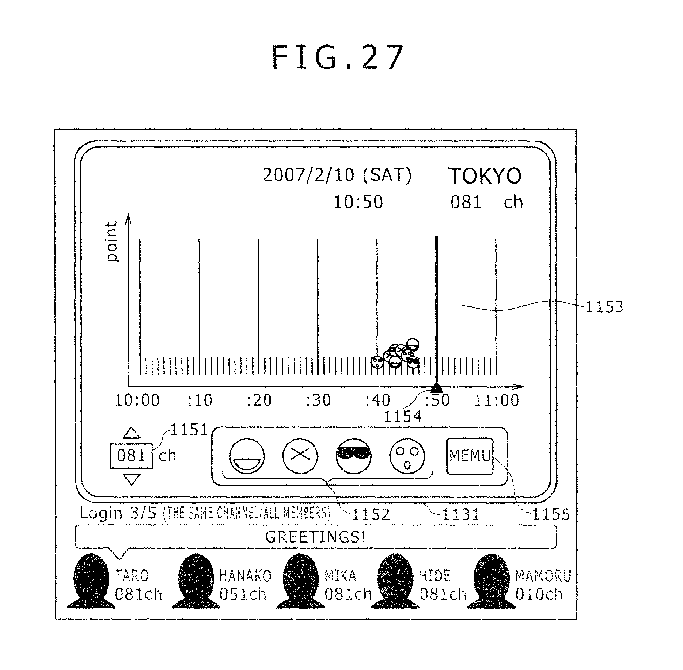

Fig. 27 is a view explanatory of another typical display in the tag display window.

Explanation of Reference Numerals

11 Content reproduction device, 11-1 Mobile phone, 11-2 HDD recorder, 11-3 Personal computer, 31 Operation input section, 32 Storage section, 33 Control section, 34 Communication section, 35 Display section, 36 Audio output section, 37 Vibration section, 38 Drive, 39 Removable media, 41 Tag data, 42 Registered tag data, 43 Registered tag count data, 51 Selection section, 52 Communication control section, 53 Reproduction control section, 54 Tag data read section, 55 Time code acquisition section, 56 Registered tag data write/read section, 57 Display control section, 58 Audio output control section, 59 Vibration control section, 71 Reception control section, 72 Transmission control section, 111 Tag display window, 134 Timeline, 135 Pointer, 136 Thumbnail image, 137 Icon button, 138 Icon display area, 211 Reproduction button, 212 Moving picture display area, 231 Icon display area, 232 Timeline, 233 Pointer, 1011 Display device, 1011-1 television set, 1011-2 Personal computer, 1011-3 Mobile phone, 1031 Operation input section, 1032 Storage section, 1033 Control section, 1034 Communication section, 1035 Display section, 1036 Audio output section, 1037 Vibration section, 1038 Drive, 1039 Removable media, 1051 Selection section, 1052 Tag read section, 1053 Time information acquisition section, 1054 Clock section, 1055 Registered tag data generation section, 1056 Registered tag count data generation section, 1057 Communication control section, 1058 Display control section, 1059 Audio output control section, 1060 Vibration control section, 1071 Transmission control section, 1072 Reception control section, 1091 Control section, 1099 Communication section, 1111 Reception control section, 1112 Registered tag count totaling section, 1113 Transmission control section, 1131 Tag display window, 1152 Icon button, 1153 Icon display area, 1154 Pointer

Best Mode for Carrying Out the Invention

Embodiments of the present invention will be explained below in reference to the accompanying drawings.
Fig. 1 is a view showing typical content reproduction devices implemented as an embodiment of the present invention.
A content reproduction device 11-1 is connected to a server 13 through wireless communication with a base station 12. The content reproduction device 11-1 receives contents transmitted by the server 13 via the base station 12, and reproduces or records the received contents. The content reproduction device 11-1 is illustratively a portable terminal device such as a mobile phone.
A content reproduction device 11-2 and a content reproduction device 11-3 are connected to the server 13 via the Internet 14. The content reproduction devices 11-2 and 11-3 receive contents transmitted by the server 13 over the Internet 14, and reproduce or record the received contents. And the content reproduction device 11-2 is illustratively a CE (consumer electronics) appliance such as a HDD (hard disk drive) recorder. The content reproduction device 11-3 is illustratively a personal computer.
The server 13 is a content server that stores contents and supplies them to the content reproduction devices 11-1 through 11-3. In this case, the contents may each be something that varies dynamically over a predetermined time period. For example, the contents may be musical compositions, moving pictures, or moving pictures containing audio or music.
And the server 13 is not limited to being located on a network such as the Internet 14; the server 13 may be set up on recording media such as the HDD included n the content reproduction devices 11-1 through 11-3.
In the ensuing description where the content reproduction devices 11-1 through 11-3 need not be distinguished individually, they may simply be called the content reproduction device 11.
Fig. 2 is a block diagram showing a functional structure of the content reproduction device 11.
The content reproduction device 11 is structured to include an operation input section 31, a storage section 32, a control section 33, a communication section 34, a display section 35, an audio output section 36, and a vibration section 37.
And the content reproduction device 11 is connected with a drive 38 as needed. Removable media 39 such as a magnetic disk, an optical disk, a magneto-optical disk, or a semiconductor memory may be loaded into the drive 38. The drive 38 under control of the control section 33 reads computer programs or data from the loaded removable media 39 and installs or stores the retrieved programs or data into the storage section 32 as needed.
The operation input section 31 is operated by a user in order to input designation to the content reproduction device 11, and supplies the control section 33 with a signal indicating the specifics of the operation. For example, if the content reproduction device 11 is a mobile phone, its operation input section 31 is made up of keys including 12 keys for inputting a dial number or the like with which to originate a call. And if the content reproduction device. 11 is illustratively a HDD recorder, its operation input section 31 is made up of a remote controller. If the content reproduction device 11 is a personal computer, then its operation input section 31 is made up of a keyboard and a mouse. And the operation input section 31 may alternatively be a touch-sensitive panel overlaid on the display section 35, to be discussed later. Furthermore, if the content reproduction device 11 is a game console capable of reproducing contents, then its operation input section 31 may be a controller connected to the game console in wired or wireless fashion.

The storage section 32 is illustratively made up of a storage medium such as a flash memory permitting random access, and stores various data and computer programs therein.

The storage section 32 stores beforehand tag data 41 representing tags to be attached to contents by the user. According to the present invention, the tags conceptually represent a subjective evaluation of the user with regard to the content being reproduced. The tag data 41 constitutes information representative of the tags and is illustratively data expressive of the user's emotions regarding the content.

And the storage device 32 stores registered tag data 42 indicating the tags which are to be attached to contents by the user or have already been attached thereto, and times into the contents at which the tags are attached thereto. Furthermore, the storage section 32 stores registered tag count data 43 indicating the number of tags which are to be attached to contents by the user or have already been attached thereto, each of the tags being identified by a tag ID (identification). The tag ID will be discussed later.

Explained hereunder in reference to Figs. 3 through 6 are details of the tag data 41, registered tag data 42, and registered tag count data 43 stored in the storage section 32.

Fig. 3 is a view showing a structure of the tag data 41. One item of tag data 41 represents one tag. The tag data 41 is made up of a tag ID, a name, icon image data, color data, sound data, and vibration pattern data.

The tag ID is information for identifying a tag. Specifically, the tag ID may be a three-digit number ranging from 001 to 999. And the tag ID is not limited to numerals; it may be a character string. Since each item of tag data 41 represents an individual tag, the tag ID identifies the tag data 41.

The name may illustratively be text data indicating the meaning of a tag. In this case, the meanings of tags denote the user's emotions toward contents, such as "wonderful" and "unpleasant." That is, the name is text data indicative of the user's emotion engendered by a given content. In other words, the name constitutes text data expressive of the user's subjective evaluation of the content.

The icon image data is display data (picture data) for causing the display section 35 to display icons representative of tags which are to be attached to contents by the user or have already been attached to the contents. In other words, the icon image is data for displaying icons indicating the user's subjective evaluations. The icons to be displayed are pictures that represent the above-mentioned names or the user's emotions. More specifically, the icon indicating the user's emotion defined as "wonderful" toward a content may be a picture of a smiling person's face, and the icon indicating the user's emotion defined as "unpleasant" may be a picture of a displeased person's face.

The color data is information for identifying the color of an icon displayed on the display section 35. As with the icon image data, the color of an icon is one which represents the user's emotion.

More specifically, the color indicating the user's emotion defined as "wonderful" toward a content may be yellow, and the color indicating the user's emotion defined as "unpleasant" may be blue.

The sound data is audio data for outputting the sound corresponding to the user's emotion represented by a tag attached to a content at a time into that content being reproduced. In other words, the sound data is data for outputting the audio representing the user's subjective evaluation. For example, the sound data may be audio data corresponding to the user's emotions such as "wonderful" and "unpleasant."

The vibration pattern data is data for generating a predetermined pattern of vibrations corresponding to the user's emotion represented by a tag attached to a content at a time into that content being reproduced. For example, four patterns of vibrations may be defined: pattern A in which vibration occurs twice per second; pattern B in which vibration occurs once every second; pattern C in which vibration varies with sound data; and pattern D in which no vibration occurs.

Fig. 4 is a view showing examples of the tag data 41. As shown in Fig. 4, the tag data with the tag ID of "001" is constituted by the name "NICE" in text data representing the meaning "wonderful," by the icon image data representing a smiling person's face, by the color data representative of the color of yellow, by the sound data representing the sound of applause, and by the vibration pattern data representative of the vibration pattern A. The tag data with the tag ID of "002" is constituted by the name "BAD" in text data representing the meaning "unpleasant," by the icon image data representing a displeased person's face, by the color data representative of the color of blue, by the sound data representing the voice of booing, and by the vibration pattern data representative of the vibration pattern B. The tag data with the tag ID of "003" is constituted by the name "COOL!" in text data representing the meaning "cool," by the icon image data representing a person's face wearing sunglasses, by the color data representative of the color of green, by the sound data representing the sound of whistling, and by the vibration pattern data representative of the vibration pattern C. The tag data with the tag ID of "004" is constituted by the name "UNCERTAIN" in text data representing the meaning "too difficult to decide," by the icon image data representing a confused person's face, by the color data representative of the color of gray, and by the vibration pattern data representative of the vibration pattern D. The tags of the tag data 41 are not limited to the above-described four types and may be supplemented later by the user.

Fig. 5 is a view showing a structure of the registered tag data 42. As described above, the registered tag data 42 indicates tags attached to a content and the times into that content at which the tags are attached thereto. The registered tag data 42 is set for each content and stored as such. The registered tag data 42 is made up of a content ID, a time code, a tag ID, and a user ID.

The content ID is information which is included in content data and which identifies the content in question. For example, the content ID may be the file name of a file that accommodates content data constituting a music or moving picture content.

The time code indicates a time into the content identified by the content ID, the time being one at which the tag identified by the tag ID is attached to the content. For example, the time code is information to be set by a time code acquisition section 55, to be discussed later; the time code indicates the time into the content being reproduced at which the attachment of the tag is designated. Also, the time code may illustratively indicate the time into the content relative to its beginning during the reproduction of the content. That is, the time code may illustratively be the time into the content being reproduced at which the tag is attached.

The tag ID is the same as the tag ID for the tag data 41 and constitutes information for identifying a tag. For example, the tag ID is included in the tag data 41 indicating the tag designated to be attached by the user.

The user ID is information for identifying the user. The user ID is user identification information such as the user's name which is set by the user operating the operation input section 31 of the content reproduction device 11.

Fig. 6 is a view showing a structure of the registered tag count data 43. As described above, the registered tag count data 43 is set for each content and indicates the number of tags which are attached to the content in question and are identified by individual tag IDs. The registered tag count data 43 is constituted by a content ID identifying the content to which are attached the tags whose count is indicated for each tag ID, by the number of tags (registered count) identified by the tag ID of 001, by the number of tags (registered count) identified by the tag ID of 002, ..., and by the number of tags (registered count) identified by the tag ID of N (N is a number ranging from 001 to 999).

That is, the registered tag count per tag ID represents the total number of tags which are attached to the content identified by the content ID and which are identified by the tag ID in question.

Returning to Fig. 2, the control section 33 is illustratively composed of a microprocessor and controls the content reproduction device 11 as a whole. The control section 33 will be discussed later in detail.

The communication section 34 transmits and receives various kinds of data through wireless communication with the base station 12 or via networks such as the Internet 14. For example, if the content reproduction device 11 is a mobile phone, then its communication section 34 is structured to include an antenna for conducting wireless communication and various kinds of data are transmitted and received by the wireless communication with the base station 12. And if the content reproduction device 11 is a HDD recorder or a personal computer, then its communication section 34 is a network interface for performing wired communication, whereby various kinds of data are transmitted and received over the Internet 14.

The display section 35 is composed of a display device such as an LCD (liquid crystal display) or an organic EL (electro luminescence) display. The display section 35 displays various pictures based on the picture data supplied from the control section 33.

The audio output section 36 is made up of so-called speakers and, under control of the control section 33, outputs the audio corresponding to an audio signal supplied from the control section 33.

The vibration section 37 is illustratively formed by a motor furnished with a decentered weight. Under control of the control section 33, the vibration section 37 vibrates in response to the signal which is supplied from the control section 33 and which indicates a vibration pattern, thus causing the content reproduction device 11 in part or as a whole to vibrate.

For example, if the content reproduction device 11 is a mobile phone, then its vibration section 37 is installed inside the enclosure of the content reproduction device 11 and causes the content reproduction device 11 as a whole to vibrate. And if the content reproduction device 11 is a HDD recorder, its vibration section 37 is incorporated in a remote controller acting as the operation input section 31 and causes the entire remote controller to vibrate.

By executing computer programs, the control section 33 implements a selection section 51, a communication control section 52, a reproduction control section 53, a tag data read section 54, a time code acquisition section 55, a registered tag data write/read section 56, a display control section 57, an audio output control section 58, and a vibration control section 59.

The selection section 51 selects a content in response to the user's operations. More specifically, the selection section 51 selects the content to which to attach tags based on the signal which is supplied from the operation input section 31 and which indicates the specifics of the operation for selecting the content. The selection section 51 then supplies information indicating the selected content to the communication control section 52. And the selection section 51 selects the content to be reproduced based on the signal which is supplied from the operation input section 31 and which indicates the specifics of the operation for selecting the content to be reproduced. The selection section 51 then supplies information indicating the selected content to the communication control section 52.

The communication control section 52 controls the transmission or reception of various kinds of data through wireless communication with the base station 12 or through communication via networks such as the Internet 14. The communication control section 52 is made up of a reception control section 71 and a transmission control section 72.

The reception control section 71 controls the reception of the communication section 34. That is, the reception control section 71 causes the communication section 34 to receive various kinds of data transmitted over the network and acquires the data received by the communication section 34.

For example, the reception control section 71 causes the communication section 34 to receive content data which has been transmitted from the server 13 and which constitutes the content data selected by the user. In other words, the reception control section 71 reads the content data of the user-selected content. The reception control section 71 supplies the reproduction control section 53 with the content data received by the communication section 34.

Furthermore, upon reading the content data of a content with no tag attached, the reception control section 71 supplies the registered tag data write/read section 56 with the content ID included in the content data.

And, upon reading the content data of a content with tags attached thereto, the reception control section 71 causes the communication section 34 to receive the registered tag data 42 and registered tag count data 43 transmitted along with the content data. The reception control section 71 supplies the storage section 32 with the registered tag data 42 and registered tag count data 43 received by the communication section 34.

The transmission control section 72 controls the transmission of the communication section 34. That is, the transmission control section 72 supplies various kinds of data to the communication section 34 and causes the communication section 34 to transmit these kinds of data over the network.

For example, the transmission control section 72 causes the communication section 34 to transmit a request for the content data of the content selected by the user. And in another example, in response to the user's designation to attach a tag, the transmission control section 72 causes the communication section 34 to transmit the registered tag data 42 or registered tag count data 43 written in the storage section 32.

The reproduction control section 53 controls the reproduction of contents based on the content data supplied from the reception control section 71. More specifically, if the content to be reproduced is a moving picture, then the reproduction control section 53 supplies the display section 35 with moving picture data which is included in the content data and which is used to display the moving picture. At the same time, the reproduction control section 53 supplies the audio output section 36 with audio data which is included in the content data and which is used to output audio or music. And in another example, if the content to be reproduced is music, then the reproduction control section 53 supplies the display section 35 with still picture data which is included in the content data and which is used to display still pictures such as an album jacket photo. At the same time, the reproduction control section 53 supplies the audio output section 36 with audio data which is included in the content data and which is used to output music.

And, the reproduction control section 53 control content reproduction time. More specifically, the reproduction control section 53 continuously verifies the remaining time of the content being reproduced. And in another example, in accordance with a signal which comes from the tag data read section 54 and which designates acquisition of a time code, the reproduction control section 53 supplies the time code acquisition section 55 with the time code indicating the current time into the content being reproduced.

The tag data read section 54 reads the tag data 41 representing the tag to be attached to the content in response to the user's operations. More specifically, based on the signal which is supplied from the operation input section 31 and which indicates the tag designated to be attached to the the tag data read section 54 reads the tag data 41 of the designated tag from the storage section 32.

The tag data read section 54 supplies the display control section 57 with the icon image data and color data as part of the tag data 41 read from the storage section 32. And the tag data read section 54 supplies the audio output control section 58 with the sound data as part of the tag data 41 read from the storage section 32. Furthermore, the tag data read section 54 supplies the vibration control section 59 with the vibration pattern data as part of the tag data 41 read from the storage section 32.

And in accordance with the signal which is supplied from the operation input section 31 and which indicates the tag designated to be attached to the content, the tag data read section 54 supplies the time code acquisition section 55 with the designation to acquire the time code for the content of which the reproduction is being controlled by the reproduction control section 53. Furthermore, in accordance with the signal which is supplied from the operation input section 31 and which indicates the tag designated to be attached to the content, the tag data read section 54 supplies the registered tag data write/read section 56 with the tag ID as part of the tag data 41 read from the storage section 32.

The time code acquisition section 55 acquires the time code for the content of which the reproduction is being controlled by the reproduction control section 53, on the basis of the designation which is supplied from the tag data read section 54 with a view to acquiring the time code for the content being reproduced. The time code acquisition section 55 supplies the acquired time code to the registered tag data write/read section 56.

The registered tag data write/read section 56 writes the registered tag data 42 to the storage section 32. More specifically, the registered tag data write/read section 56 writes to the storage section 32 the tag ID supplied from the tag data read section 54 and the time code supplied from the time code acquisition section 55, in association with one another constituting the registered tag data 42. Furthermore, the registered tag data write/read section 56 writes to the storage section 32 the content ID supplied from the communication control section 52 and the user ID input beforehand by the user through the operation input section 31, together with the tag ID and time code constituting the registered tag data 42.

And the registered tag data write/read section 56 reads the registered tag data 42.
More particularly, the registered tag data write/read section 56 reads from the storage section 32 the registered tag data 42 including the content ID of the content which has been selected to be reproduced by the user and to which tags are attached.

Furthermore, upon reproduction of a tagged content, the registered tag data write/read section 56 checks whether there exists in the storage section 32 the registered tag data 42 having the time code indicating the current time into the content being reproduced.

The display control section 57 controls the display of the display section 35. More specifically, if the user has selected either a mode in which to attach tags or a mode in which to reproduce a content with tags attached thereto by the user, the display control section 57 causes the display section 35 to display a tag display window 111 in which to display the tags as shown in Fig. 7. Furthermore, based on the icon image data and color data supplied from the tag data read section 54, the display control section 57 causes the tag display window 111 to display icons corresponding to the tags which are designated to be attached to a content or have already been attached to the content.

Fig. 7 is a view explanatory of the tag display window 111 made to be displayed on the display section 35 by the display control section 57.

As shown in Fig. 7, the tag display window 111 is structured to include a REPRODUCE button 131, a STOP button 132, a PAUSE button 133, a timeline 134, a pointer 135, a thumbnail image 136, an icon button 137, an icon display area 138, and a REGISTER button 139.

The REPRODUCE button 131 is selected when the content is designated to be reproduced. When the REPRODUCE button 131 is selected by the user's operation, the reproduction control section 53 starts reproducing the content.

The STOP button 132 is selected when the reproduction of the content is designated to be stopped. When the STOP button 132 is selected by the user's operation, the reproduction control section 53 stops the reproduction of the content.

The PAUSE button 133 is selected when the reproduction of the content is designated to be stopped temporarily. When the PAUSE button 133 is selected by the user's operation, the reproduction control section 53 temporarily stops the reproduction of the content.

The timeline 134 represents the time base serving as a temporal reference for the content being reproduced. In Fig. 7, the leftmost position of the timeline 134 indicates the beginning of a content reproduction time, and the rightmost position of the timeline 134 indicates the end of the content reproduction time.

The pointer 135 moves along the timeline 134 in keeping with the content reproduction time, pointing to the time into the content being reproduced. Before the reproduction of the content is started, the pointer 135 is located in the leftmost position of the timeline 134. When the reproduction of the content is started, the pointer 135 starts moving from the leftmost position of the timeline 134 in the rightward direction in Fig. 7 in accordance with the time into the content being reproduced.

If the content to be reproduced is music, then the thumbnail image 136 may illustratively be a still picture such as an album jacket photo. And if the content to be reproduced is a moving picture, then the thumbnail image 136 is a still picture representative of the moving picture.

The icon button 137 indicates candidate tags that may be designated to be attached to the content by the user. Pictures of the icon button 137 are displayed based on the icon image data of the tag data 41. The user can attach a tag to the content by selecting one of the icons in the icon button 137. The icons displayed in the icon button 137 may be those of the tags limited and determined beforehand by the user. That is, the candidate tags to be attached to the content may be limited beforehand by the user according to the user's preferences. In this case, the operation input section 31 inputs the designation to attach a tag in response to the user's operation out of the tags preselected by the user from among the tags represented by the tag data 41. In this manner, the display in the tag display window 111 is kept from getting complicated, whereby the user's operations to attach tags are made more efficient.

The icon display area 138 is an area in which to display the icons corresponding to the tags designated to be attached to the content by the user. When the user selects one of the icons in the icon button 137, the tag corresponding to the selection in the icon button 137 is attached to the current time into the content being reproduced. As a result of this, the icon corresponding to the selected icon button 137 is displayed on a plumb line of the pointer 135 in the icon display area 138. That is, based on the time code and on the icon image data of the selected icon in the icon button 137, the display control section 57 controls the display of the icon in that position on the timeline 134 which represents the time indicated by the time code. Here, it is assumed that the vertical direction in the icon display area 138 has no particular significance.

The REGISTER button 139 is a button to be selected to transmit to the server 13 the registered tag data 42 and registered tag count data 43 which were stored into the storage section 32 by the user's operations to attach tags to a content when the reproduction of that tagged content was terminated.

And although not shown in Fig. 7, a predetermined area inside the tag display window 111 may be arranged to display the time into the content being reproduced in keeping with the position of the pointer 135 along the timeline 134. And, the values representing a content reproduction start time and a content reproduction end time may be displayed near the rightmost and leftmost positions of the timeline 134.

Returning to the explanation of Fig. 2, the audio output control section 58 controls the audio output of the audio output section 36. Based on the sound data supplied from the tag data read section 54, the audio output control section 58 outputs the sounds corresponding to the tags which are designated to be attached to a content by the user or have already been attached thereto. For example, upon reproduction of a content and based on the time code of the registered tag data 42 and on the sound data included in the tag data 41 identified by the tag ID, the audio output control section 58 controls the output of the audio at that time into the content being reproduced which is indicated by the time code.

The vibration control section 59 controls the vibrations of the vibration section 37. The vibration control section 59 causes the vibration section 37 to vibrate based on the vibration pattern data supplied from the tag data read section 54. For example, upon reproduction of a content and based on the time code of the registered tag data 42 and on the vibration pattern data included in the tag data 41 identified by the tag ID, the vibration control section 59 controls the generation of vibrations at that time into the content being reproduced which is indicated by the time code.

Fig. 8 is a flowchart showing the process of attaching tags carried out by the content reproduction device 11.

For example, the user operates the operation input section 31 to select the mode in which to attach tags, as well as to give the designation to select the content to which to attach tags. This causes the content reproduction device 11 to start the process of attaching tags to the content.

In step S11, the selection section 51 selects the content to which to attach tags. More specifically, the selection section 51 selects the content to which to attach tags based on the signal which is supplied from the operation input section 31 and which indicates the specifics of the operation for selecting the content to be tagged. The selection section 51 then supplies information indicating the selected content to the communication control section 52. The transmission control section 72 causes the communication section 34 to transmit to the server 13 a request for the content data of the selected content.

In step S12, the reception control section 71 reads the content data of the selected content. More specifically, the reception control section 71 causes the communication section 34 to receive the requested content data transmitted from the server 13. The reception control section 71 supplies the reproduction control section 53 with the content data received by the communication section 34. And at this point, the reception control section 71 supplies the content ID included in the content data to the registered tag data write/read section 56.

In step S13, the reproduction control section 53 starts reproducing the content. More specifically, the user selects the REPRODUCE button 131 in the tag display window 111 displayed on the display section 35 when the mode in which to reproduce the tagged content is selected. This causes the reproduction control section 53 to control the reproduction of the content based on the content data supplied from the reception control section 71. For example, if the content to be reproduced is a moving picture, the reproduction control section 53 supplies the display section 35 with the moving picture data which is included in the content data and which is used to display the moving picture. At the same time, the reproduction control section 53 supplies the audio output section 36 with the audio data which is included in the content data and which is used to output audio or music. And in another example, if the content to be reproduced is music, the reproduction control section 53 supplies the display section 35 with the still picture data which is included in the content data and which is used to display still pictures such as an album jacket photo. At the same time, the reproduction control section 53 supplies the audio output section 36 with the audio data which is included in the content data and which is used to output music.

In step S14, the display control section 57 starts moving the pointer 135 indicating the time code along the timeline 134. More specifically, given the designation to start reproducing the content, the display control section 57 starts moving the pointer 135 to the position corresponding to the time into the content being reproduced, in the tag display window 111 on the display section 35.

In step S15, the reproduction control section 53 checks whether the reproduction of the content is terminated. If the content reproduction is not found to be terminated, i.e., if there still remains the reproduction time of the content being reproduced, then control is passed on to step S16.

In step S16, the tag data read section 54 checks whether a tag is designated to be attached. That is, a check is made to determine whether one of the icons of the icon button 137 is selected by the user in the tag display window 111. More particularly, when the user operates the operation input section 31, the tag data read section 54 checks whether the operation input section 31 has supplied a signal designating the tag to be attached to the content.

If no tag is found designated to be attached, control is returned to step S15. Steps S15 and S16 are repeated until a tag is found designated to be attached provided the reproduction of the content is not terminated.

Meanwhile, if in step S16 a tag is found designated to be attached, i.e., if the tag data read section 54 finds that the operation input section 31 has supplied the signal designating the tag to be attached to the content, then control is passed on to step 517.

In step S17, the tag data read section 54 reads the tag data 41 of the designated tag. More specifically, the tag data read section 54 supplies the time code acquisition section 55 with a signal for designating acquisition of the time code for the content of which the reproduction is being controlled by the reproduction control section 53. Based on the signal which is supplied from the operation input section 31 and which indicates the tag designated to be attached to the content, the tag data read section 54 reads the tag data 41 of the designated tag from the storage section 32. In other words, the tag data read section 54 reads the tag data 41 including the icon image data of the icon selected from the icon button 137 in the tag display window 111. The tag data read section 54 supplies the registered tag data write/read section 56 with the tag ID as part of the read tag data 41. And, the tag data read section 54 supplies the display control section 57 with the icon image data and color data as part of the read tag data 41.

In step S18, the time code acquisition section 55 acquires the time code for the content being reproduced. More specifically, when supplied with a signal from the tag data read section 54 designating acquisition of the time code, the time code acquisition section 55 acquires the time code indicating the current time into the content of which the reproduction is being controlled by the reproduction control section 53. The time code acquisition section 55 supplies the acquired time code to the registered tag data write/read section 56.

In step S19, the storage section 32 stores the time code of the content and the tag ID of the tag data 41 in association with one another. That is, the registered tag data write/read section 56 writes to the storage section 32 the registered tag data 42 constituted by the tag ID supplied from the tag data read section 54 and by the time code supplied from the time code acquisition section 55. Furthermore, the registered tag data write/read section 56 writes to the registered tag data 42 in the storage section 32 the content ID supplied from the reception control section 71 and the user ID input beforehand by the user through the operation input section 31, in association with the tag ID and time code.

In step S20, the display section 35 displays the icon corresponding to the tag designated to be attached, in the time code position indicated by the pointer 135 along the timeline 134. More specifically, the display control section 57 supplies the display section 35 with the icon image data and color data as part of the tag data 41 of the tag designated to be attached, the data being supplied from the tag data read section 54. The display section 35 displays the icon based on the supplied icon image data and color data, in the icon display area 138 of the tag display window 111, on a plumb line of the pointer 135 in the position corresponding to the time code written to the registered tag data 42, i.e., in the position corresponding to the current time into the content being reproduced.

Fig. 9 is a view showing the tag display window 111 in effect when the currently reproduced content has tags attached thereto.

In Fig. 9, if the user selects illustratively the left-hand side icon in the icon button 137 (i.e., icon of the tag identified by the tag ID of 001), then the same icon selected by the user is displayed on the plumb line of the pointer 135 in a suitable position along the timeline 134. That is, in Fig. 9, the position of the pointer 135 in the crosswise direction indicates the current time into the content being reproduced, so that the icon is displayed in the position indicating the time at which the tag is designated to be attached.

In this manner, the user can attach the tag to the content in intuitive and simple fashion by selecting the icon button 137 while the content is being reproduced.

And at this point, the display of the icon may be accompanied by the output of sounds and the generation of vibrations based on the sound data and the vibration pattern data corresponding to the tag data 41 of the attached tag. More specifically, the tag data read section 54 supplies the audio output control section 58 with the sound data as part of the read tag data 41 and the vibration control section 59 with the vibration pattern data as part of the read tag data 41, thereby causing the audio output section 36 to output audio and the vibration section 37 to generate vibrations.

After step S20, control is returned to step S15. The subsequent steps are repeated until there remains no reproduction time of the content, i.e., until the reproduction of the content is terminated.

Meanwhile, if in step S15 the content reproduction is found to be terminated, then the process is brought to an end. At this point, a registered tag count calculation section, not shown, calculates the number of the tags attached to the content in question for each tag ID identifying the tags on the basis of the registered tag data 42 written during the content reproduction, and writes the calculated numbers to the registered tag count data 43 along with the content ID of the content having been reproduced.

And, if the user selects the REGISTER button 139 in the tag display window 111 following the termination of the content reproduction, the transmission control section 72 causes the communication section 34 to transmit to the server 13 the registered tag data 42 and registered tag count data 43 written to the storage section 32 in accordance with the user's designation to attach the tags.

And, the transmission of the registered tag data 42 and registered tag count data 43 to the server 13 is not limited to being executed upon selection of the REGISTER button 139 following the content reproduction. Alternatively, the transmission may be carried out every time the time code and the tag ID are written to the registered tag data 42 in step S19 of the above-described flowchart.

In this manner, the content reproduction device 11 permits attachment of a tag to a given time into the content being reproduced as representative of the user's emotion toward the content, i.e., the user's subjective evaluation of the content, along with the display of the icon representing the tag in the position corresponding to the time at which the tag is designated to be attached on the time base indicating the content reproduction time. This makes it possible for the user to make easier-to-understand evaluations reflecting the user's emotions toward the content.

And, according to the above-described structure, when the content being reproduced is evaluated by the user in a manner reflecting the user's emotion toward it, the user need only operate the operation input section 31 simply to attach tags to the content.

As described above, if the content reproduction device 11 is a mobile phone, then the operation input section 31 is made up of 12 keys as shown in Fig. 10.

Of the 12 keys in Fig. 10, the numeral key "1" for inputting "1" of a dial number is assigned the tag identified by the tag ID of 001; the numeral key "2" is assigned the tag identified by the tag ID of 002; the numeral key "3" is assigned the tag identified by the tag ID of 003; and the numeral key "4" is assigned the tag identified by the tag ID of 004. These assignments are indicated by the icons corresponding to the respective tag IDs.

As shown in Tig 10, the tags may be assigned to some of the 12 keys in advance. This allows the user simply to push a given numeral key as the operation to attach the assigned tag.

And the setup in Fig. 10 is not limitative of the invention. If the degrees of significance of each tag are assigned to some of the 12 keys, the user can perform operations to attach tags in sentient fashion. For example, of the 12 keys, the numeral keys "1," "2" and "3" may be assigned the meanings of "pretty good," "good" and "very good," respectively, as the degrees of significance of a given tag; and the numeral keys "4," "5" and "6" may be assigned the meanings of "pretty bad," "bad" and "very bad," respectively, as further degrees of significance of the tag. The assignments of the 12 keys arrayed in the crosswise direction can thus express the levels of the user's emotion. Alternatively, the assignments of the 12 keys arrayed in the lengthwise direction may express the levels of the user's emotion likewise.

In this manner, the operation input section 31 of the content reproduction device 11 may by implemented in the form of an input interface as simple as the 12 keys. This allows the user to perform operations to attach tags more simply than ever.

Explained next in reference to Fig. 11 is the process of reproducing a tagged content carried out by the content reproduction device 11.

Fig. 11 is a flowchart showing the process of reproducing the tagged content.

For example, the user operates the operation input section 31 to select the mode in which to reproduce the tagged content, as well as to give the designation to select the content to be reproduced. This causes the content reproduction device 11 to start the process of reproducing the content.

In step S31, the selection section 51 selects the content to be reproduced. More specifically, the selection section 51 selects the content to be reproduced based an the signal which is supplied from the operation input section 31 and which indicates the specifics of the operation for selecting the content to be reproduced. The selection section 51 then supplies information indicating the selected content to the communication control section 52. The transmission control section 72 causes the communication section 34 to transmit to the server 13 a request for the content data of the content selected by the user.

In step S32, the reception control section 71 reads the content data and registered tag data of the selected content. More specifically, the reception control section 71 causes the communication section 34 to receive the requested content data transmitted from the server 13, as well as the registered tag data 42 transmitted along with the content data from the server 13. The reception control section 71 supplies the reproduction control section 53 with the content data received by the communication section 34. And, the reception control section 71 supplies the storage section 32 with the registered tag data 42 received along with the content data by the communication section 34.

In step S33, the display section 35 displays in the tag display window 111 the icons corresponding to the tags attached to the content. That is, given the user's designation to reproduce the tagged content, the display control section 57 causes the display section 35 to display the tag display window 111 in which to display tags. At this point, the registered tag data write/read section 56 reads the registered tag data 42 from the storage section 32. Based on the tag IDs of the registered tag data 42 that was read, the tag data read section 54 reads the tag data 41. Based on the tag IDs and time codes of the read registered tag data 42 as well as on the tag IDs, icon image data, and color data of the read tag data 41, the display control section 57 displays the icons corresponding to the tags in those positions in the icon display area 138 which represent the times indicated by the time codes.

In step S34, the reproduction control section 53 starts reproducing the content. More specifically, when the user selects the REPRODUCE button 131 in the tag display window 111, the reproduction control section 53 controls the reproduction of the content based on the content data supplied from the reception control section 71. For example, if the content to be reproduced is a moving picture, then the reproduction control section 53 supplies the display section 35 with the moving picture data which is included in the content data and which is used to display the moving picture. At the same time, the reproduction control section 53 supplies the audio output section 36 with the audio data which is included in the content data and which is used to output audio or music. And, if the content to be reproduced is music, then the reproduction control section 53 supplies the display section 35 with the still picture data which is included in the content data and which is used to display still pictures such as an album jacket photo. At the same time, the reproduction control section 53 supplies the audio output section 36 with the audio data which is included in the content data and which is used to output music.

In step S35, the display control section 57 starts moving the pointer 135 indicating the time code along the timeline 134. More specifically, given the designation to start reproducing the content, the display control section 57 starts moving the pointer 135 in the tag display window 111 displayed on the display section 35.

In step S36, the reproduction control section 53 checks whether the reproduction of the content is terminated. If the content reproduction is not found to be terminated, i.e., if there still remains the reproduction time of the content being reproduced, then control is passed on to step S37.

In step S37, the registered tag data write/read section 56 checks whether there exists the registered tag data 42 having the time code corresponding to the current time into the content being reproduced. If there is found no registered tag data 42 having the time code corresponding to the current time, i.e., if there is found no attached tag in effect at this point in time into the content being reproduced, then control is returned to step S36. Steps S36 and S37 are then repeated until the time is reached at which a tag is found attached to the content being reproduced provided the reproduction of the content is not terminated. Incidentally, at this point, there is no icon located on the plumb line of the pointer 135 moving from left to right along the timeline 134 in the tag display window 111.

Meanwhile, if in step S37 there is found the registered tag data 42 having the time code corresponding to the current time, i.e., if there is found an attached tag in effect at this point in time into the content being reproduced, then control is passed on to step S38. At this point, there is an icon located on the plumb line of the pointer 135 moving from left to right along the timeline 134 in the tag display window 111.

In step S38, the audio output section 36 and vibration section 37 output sounds and generate vibrations based on the tag data 41 corresponding to the registered tag data 42. More specifically, the registered tag data write/read section 56 reads the registered tag data 42 having the time code corresponding to the current time, and supplies the tag ID of the registered tag data 42 to the tag data read section 54. The tag data read section 54 reads the tag data 41 based on the supplied tag ID. The tag data read section 54 supplies the audio output control section 58 with the sound data as part of the read tag data 41 and the vibration control section 59 with the vibration pattern data as part of the read tag data 41. The audio output control section 58 causes the audio output section 36 to output sounds based on the sound data from the tag data read section 54, and the vibration control section 59 causes the vibration section 37 to vibrate based on the vibration pattern data from the tag data read section 54.

In the above-described steps S37 and S38, upon finding the registered tag data 42 having the time code corresponding to the current time, the tag data 41 and registered tag data 42 corresponding to that time were arranged to be read. Alternatively, all registered tag data 42 may be read beforehand from the storage section 32, and the tag data 41 may be read successively based on the time codes of the registered tag data 42 that has been read.

In step S39, the audio output control section 58 and vibration control section 59 check whether a predetermined time period has elapsed. That is, the audio output control section 58 checks whether the predetermined time period has elapsed after causing the audio output section 36 to start outputting sounds, and the vibration control section 59 checks whether the predetermined time period has elapsed after causing the vibration section 37 to start vibrating. In this case, the predetermined time period is a sufficiently short time period (e.g., one to three seconds) relative to the total content reproduction time.

If in step S39 the predetermined time period is not found to have elapsed, the audio output control section 58 causes the audio output section 36 to continue outputting audio and the vibration control section 59 causes the vibration section 37 to continue vibrating, until the predetermined time period has elapsed.

Meanwhile, if in step S39 the predetermined time period is found to have elapsed, then the audio output control section 58 causes the output section 36 to stop outputting audio and the vibration control section 59 causes the vibration section 37 to stop vibrating. From step S39, control is returned to step S36.

And meanwhile, if in step S36 the reproduction of the content is found to be terminated, the process is brought to an end.

As described, the content reproduction device 11 can reproduce the content with the tags representative of the user's emotions while displaying the icons corresponding to the attached tags. In this manner, the content reproduction device 11 permits an intuitive understanding of another user's evaluation of a given content. And when the user's emotions are represented not in text or other detailed information but in the form of tags, it is possible to provide an intuitive understanding of the evaluations of the content in question.

Furthermore, when audio is output and vibrations are generated in accordance with the tags during the reproduction of the content, it is possible to present the content more enjoyably to the user who is viewing it.

And where the reproduction of the content evaluated by another user has been started, the user viewing the content can recognize the other user's evaluations of certain parts of the content being reproduced as representative of the other user's emotions, not as information about the specifics of the content. Thus the user can obtain solely expectations with regard to the content in question.

In the above-described flowchart of Fig. 11, it was shown how the content with tags attached thereto is reproduced. Alternatively, it is possible to attach more tags to the content with the tags attached by some other user, using steps S16 through S18 in Fig. 8. That is, the user can add his or her evaluations to the content evaluated by some other user.

In this case, as shown in Fig. 12, the icon representing each tag attached by the user is framed by a suitably colored frame 151 in the icon display area 138 in order to distinguish the user-attached tags from those attached by the other user. And as shown in Fig. 13, when a given icon in the icon display area 138 is disposed or selected by operation of the user, a user name 152 (e.g., TOKASHIKI) of the user who attached the tag in question may be arranged to be displayed.

The foregoing can be implemented illustratively by the display control section 57 using user-specific color information included in the user ID of the registered tag data 42 and the user name constituting the user ID as text data.

Alternatively, when the icon of a tag attached by a given user once is selected by the same user, the tag attached to the content may be deleted.

And if in the icon display area 138 a plurality of identical icons are to be displayed close to one another, i.e., if tags are attached in concentrated fashion over a short period of time, these icons may be replaced by a single icon of a different size displayed in a position close to the initially displayed icons to avoid the icons from overlapping each other.

More specifically, as shown illustratively in Fig. 14, if a content of which the total reproduction time is T is being reproduced, if an icon 191A is disposed in that position of the icon display area 138 which corresponds to a time $t_A$ into the reproduction time while an icon 191B is disposed in that position of the icon display area 138 which corresponds to a time $t_B$ into the reproduction time, and if the time $t_A$ and time $t_B$ meet the following expression (1), then these icons may be integrated into a single icon with its size proportional to the number of the integrated icons, the single icon being displayed in that position of the icon display area 138 which corresponds to a time $t_M = (t_A + t_B)/2$ midway between the time $t_A$ and time $t_B$:

$$t_B - t_A \geq \alpha \times T \qquad \ldots (1)$$

where, $\alpha$ denotes a suitable constant which may be set illustratively by the user.

And, in the foregoing description, it was assumed that the vertical direction of the icon display area 138 has no particular significance. Alternatively, the display area may be divided vertically for each of the icons displayed. If there are numerous icons, then a vertical axis representing the number of icons may be provided while the horizontal axis is arranged to represent reproduction time (i.e., timeline 134), whereby a line graph may be displayed in a manner indicating the number of icons versus the reproduction time.

Fig. 15 is a view explanatory of how a moving picture being reproduced as the content with tags attached thereto is typically displayed along with the icon display area on the display section 35.

On the left-hand side of Fig. 15, a REPRODUCE button 211 is selected when the moving picture is to be reproduced as the content. When the REPRODUCE button 211 is selected, a moving picture display area 212 displays the moving picture of which the reproduction is controlled by the reproduction control section 53. Although not shown in Fig. 15, the display section 35 displays such buttons as a PAUSE button and a STOP button related to the moving picture reproduction in addition to the REPRODUCE button 211.

Meanwhile, on the right-hand side of Fig. 15, an icon display area 231 is shown as an area in which to display the icons corresponding to the tags attached to the moving picture as the content to be reproduced. The icon display area 231 is roughly bisected in the vertical direction. Of the bisected areas, the upper area is an area in which to display the icons representing the tags attached by another user, and the lower area is an area in which to display the icons representing the tags attached by the user operating the content reproduction device 11. A timeline 232 is the time base providing temporal reference to the moving picture being reproduced. The leftmost position of the timeline 232 indicates the starting point of the reproduction time of the moving picture, and the rightmost position of the timeline 232 indicates the end point of the reproduction time. A pointer 233 moves along the timeline 232 in keeping with the reproduction time of the moving picture.

In the example of Fig. 15, when the user selects the REPRODUCE button 211, the moving picture is displayed and its reproduction is started in the moving picture display area 212. At this point, the pointer 233 starts moving from the leftmost position of the timeline 233 in the icon display area 231.

In this case, the vertically bisected icon display areas 231 shown in Fig. 15 are further divided in the vertical direction as shown in Fig. 16. That is, in Fig. 16, each of the vertically bisected icon display areas 231 is shown divided by broken lines into eight areas corresponding to eight types of icons 251 representing the tags attached to the moving picture making up the content. The eight types of icons indicated by the icons 251 are disposed respectively in the eight divided areas.

In this manner, the user can easily verify and compare his or her own evaluation of the content and that of another user. And, as explained above in reference to Figs. 12 and 13, the icons may be arranged to include such information as user IDs so as to pinpoint the other user who attached tags similar to those of this user.

And by using the above-described registered tag count data 43, it is possible to search for contents to which similar tags have been attached. This can be implemented illustratively by acquiring the distribution of the tag count for each of the tag IDs ranging from 001 to N in the registered tag count data 43 and by searching for the content IDs of the contents having similar tag count distributions.

The icons to be displayed are not limited to the facial expressions of the person with emotions as explained above. Alternatively, the icons may represent the gestures of the person's hands (e.g., clapping and making a cross) or the facial expressions of animals. And if the display area of the display section 35 is narrow, the icons to be displayed may be given only in the form of dots based on color data.

As described, when predetermined information is recorded along with the content, it is possible to evaluate that content. And when the reproduction of a content varying dynamically over a predetermined time period is being controlled, if designation is made to attach a tag representing the user's subjective evaluation toward the content being reproduced, then the tag information stored beforehand as representative of that tag is read and so is the time information indicating the time into the content at which the tag was designated to be attached by the user, the time information and the tag information being arranged to be stored in association with one another. This makes it possible to make an easier-to-understand evaluation of the content.

Incidentally, if the icon display area 138 is given significance in the vertical direction, the above-described content reproduction device 11 can present the user with evaluations easier to understand than before.

That is, the vertical axis of the icon display area 138 may be arranged to represent the number of tags attached in a short period of time (e.g., unit time). This makes it possible for the user to know the magnitude of his or her evaluation of a given content as well as the magnitude of the evaluation by some other user regarding the content.

Accordingly, what follows is an explanation of the case where the vertical axis of the icon display area represents the number of tags.

Fig. 17 is a view showing a typical structure of a tag registration system to which the present invention is applied.

As shown in Fig. 17, this tag registration system is made up of three display devices 1011-1 through 1011-3 and a tag management server 1012 interconnected via the Internet 1013 and a base station 1014.

The display device 1011-1 is illustratively a television set, and the display device 1011-2 is illustratively a personal computer. And the display device 1011-3 is illustratively a portable terminal device such as a mobile phone. The number of display devices connected to the Internet 1013 and base station 1014 is not limited to three; the display device count may be one, two, four or higher.

The display devices 1011-1 through 1011-3 are capable of receiving contents broadcast in the form of terrestrial analog broadcasts, terrestrial digital broadcasts, or BS (broadcasting satellite)/CS (communications satellite) digital broadcasts; or contents distributed by content servers, not shown, via the Internet 1013 and base station 1014, in order to let the user view the received contents.

In the ensuing description, the contents are assumed to be television broadcast programs. However, the contents may alternatively be moving pictures other than television broadcast programs, as well as music, etc.

And, the display devices 1011-1 through 1011-3 allow their users to register tags as data representing the users' diverse emotions with regard to particular parts of the contents being viewed by the users operating the display devices 1011-1 through 1101-3 using applications running on the devices' respective platforms (e.g., APPLICAST (registered trademark) for the television set, Web browser for the personal computer, and iAPPLI (registered trademark) for the mobile phone). Information related to the tags registered with regard to the contents is transmitted to the tag management server 1012.

In this case, registering the tags with regard to the contents is equivalent to generating the registered tag data in Fig. 20, to be discussed later.

Incidentally, the users of the display devices 1011-1 through 1011-3 may designate tags to be registered with regard to the contents by operating these display devices 1011-1 through 1011-3 while viewing the contents on these display devices 1011-1 through 1011-3. Alternatively, the users may designate tags to be registered with regard to the contents by operating the display devices 1011-1 through 1011-3 while viewing the contents on devices that are different from these display devices 1011-1 through 1011-3.

In the ensuing description, the display devices 1011-1 through 1011-3 may be simply called the display device 1011 where there is no need ta distinguish the individual devices 1011-1 through 1011-3 from one another.

The tag management server 1012 stores (manages) the information related to the tags transmitted from the display device 1011. The tag-related information stored in the tag management server 1012 is shared by the display devices 1011-1 through 1011-3.

Fig. 18 is a block diagram showing a typical functional structure of the display device 1011.

The display device 1011 has an operation input section 1031, a storage section 1032, a control section 1033, a communication section 1034, a display section 1035, an audio output section 1036, and a vibration section 1037.

And, the display device 1011 may be connected with a drive 1038 as needed. Removable media 1039 such as a magnetic disk, an optical disk, a magneto-optical disk, or a semiconductor memory may be loaded into the drive 1038. Under control of the control section 1033, the drive 1038 reads computer programs or data from the loaded removable media 1039 and installs or stores what has been read into the storage section 1032 as needed.

The operation input section 1031 is operated by the user when designation or the like is input to the display device 1011. The operation input section 1031 supplies an operation signal indicating the specifics of the operation to the control section 1033.

For example, if the display device 1011 is a television set, its operation input section 1031 is made up of a remote controller. If the display device 1011 is a personal computer, then its operation input section 1031 is made up of a keyboard and a mouse. And, if the display device 1011 is a mobile phone, then its operation input section 1031 is made up of keys through which to input a dial number for originating a call. And, the operation input section 1031 may be a touch-sensitive panel to be overlaid on the display section 1035, to be described later. Furthermore, if the display device 1011 is a game console to be connected to the network, then the operation input section 1031 may be a controller connected to the game console in wired or wireless fashion.

The storage section 1032 is illustratively constituted by a storage medium such as a flash memory permitting random access, and stores various data and computer programs.

The storage section 1032 stores tags as data representative of different types of emotions. In this case, the tags may be stored beforehand in the storage section 1032, or may be downloaded from servers such as the tag management server 1012 to the display device 1011 before being stored into the storage device 1032.

And, the storage section 1032 stores registered tag data which associates tag IDs (identifications) as identification information for identifying the tags designated to be registered by the user, with time information representing the times at which the tags were designated to be registered.

Furthermore, the storage section 1032 stores registered tag count data as data indicating the number of tags for each of the tag types designated to be registered by the user (i.e., registered tag count).

Explained hereunder in reference to Figs. 19 through 21 are details of the tags, registered tag data, and registered tag count data to be stored in the storage section 1032.

Fig. 19 is a view showing a typical tag structure.

The tag is constituted by a tag ID, a name, icon image data, color data, sound data, and vibration pattern data.

The tag ID is information for identifying the tag. Specifically, the tag ID may illustratively be a three-digit number ranging from 001 to 999. The tag ID is not limited to numbers; it may be a character string instead.

The name is text data indicating the emotion (i.e., its type) represented by the tag. More specifically, the name may illustratively be "NICE" expressing the emotion defined as "wonderful," or "BAD" expressing the emotion defined as "unpleasant." For example, the tag named "NICE" represents the "wonderful" emotion. And as another example, the tag named "BAD" represents the "unpleasant" emotion. There are other tags that represent various other emotions.

The icon image data is image data for displaying the icon expressive of the emotion represented by the tag. For example, the icon image data for the tag representing the "wonderful" emotion (tag named "NICE") permits display of the smiling face of a person. And the icon image data for the tag representing the "unpleasant" emotion (tag named "BAD") permits display of the facial expression of a displeased person.

The color data is information for designating the color of the icon to be displayed by the icon image data. What is adopted as the color data is the data expressive of the color that calls to mind the emotion represented by the tag. For example, yellow may be adopted as the color that calls to mind the "wonderful" emotion, and blue may be adopted as the color calling to mind the "unpleasant" emotion.

The sound data is audio data for outputting the sound expressive of the emotion represented by the tag. For example, the audio data of clapping hands may be adopted for the tag expressive of the "wonderful" emotion. And the audio data of the voice of booing may be adopted for the tag expressive of the "unpleasant" emotion.

The vibration pattern data is data for generating vibrations of a predetermined pattern. For example, there may be four patterns of vibrations: pattern A in which vibration occurs twice per second; pattern B in which vibration occurs once every second; pattern C in which vibration occurs in keeping with the sound data; and pattern D in which no vibration occurs.

The types of tags are the same as those explained above in reference to Fig. 4 and thus will not be

Fig. 20 is a view showing a structure of registered tag data.

The registered tag data is made up of region information, channel information, time information, a tag ID, and a user ID.

The region information is information for indicating the region in which the content subject to the tag registration (i.e., content being viewed by the user) is (or was) broadcast. For example, the region information is given as the name of a metropolitan or prefectural region and the name of a city, a ward or a municipality.

The channel information is information for indicating the channel on which the content subject to the tag registration is (or was) broadcast. For example, the channel information is the number representing the channel on which the content subject to the tag registration is broadcast.

The time information indicates the time at which the tag was designated to be registered for the content subject to the tag registration. For example, the time information indicates a time-of-day down to seconds (in year, month, day, hours, minutes, seconds).

The tag ID is the same as the tag ID of the tag (Fig. 19). The tag ID is included in the tag designated to be registered for the content by the user.

The user ID is information for identifying the user, such as the name of the user who uses the display device 1011.

The user ID is set by the user who uses the display device 1011, by operation of the operation input section 1031.

Fig. 21 is a view showing a typical structure of registered tag count data.

The registered tag count data is made up of region information, channel information, unit time information, and the number of registered tags for each tag ID.

The region information in the registered tag count data is the same as the region information in the registered tag data; it is the information for indicating the regian in which the content is broadcast. And the channel information in the registered tag count data is the same as the channel information in the registered tag data; it is the information for indicating the channel on which the content is broadcast.

The unit time information is constituted by information indicating a predetermined unit time and by information indicating the time at which that unit time is started (called the start time hereunder where appropriate). For example, the unit time information representing a one-minute time zone starting from 10:24, February 10, 2007, is constituted by the information indicating that the start time is 10:24, February 10, 2007, and by the information indicating that the unit time is one minute. And as another example, the unit time information representing a ten-minute time zone starting from 10:30, February 10, 2007, is constituted by the information indicating that the start time is 10:30, February 10, 2007 and by the information indicating that the unit time is ten minutes.

The number of registered tags for each tag ID is the number of tags designated to be registered in a time period represented by the unit time information (e.g., if the start time is 10:24, February 10, 2007 and the unit time is one minute, then a one-minute time period starts at 10:24, February 10, 2007). Specifically, as shown in Fig. 21, the number of registered tags for each tag ID is made up of the number of tags with the tag ID of 001 designated to be registered in the unit time period starting from the star time, the number of tags with the tag ID of 002 designated to be registered, ..., the number of tags with the tag ID of N (N is a number ranging from 001 to 999) designated to be registered.

For example, if the unit time information is constituted by the information indicating that the start time is 10:30, February 10, 2007 and by the information indicating that the unit time is ten minutes, then the number of registered tags for each tag ID indicates the number of tags for each tag type designated to be registered in ten minutes (of time period) between 10:30 and 10:40, February 10, 2007.

Returning to Fig. 18, the control section 1033 is illustratively composed of a microprocessor and controls the display device 1011 as a whole, The control section 1033 will be discussed later in detail.

The communication section 1034 transmits and receives various kinds of data over networks such as the Internet 1013 or through wireless communication with the base station 1014. For example, if the display device 1011 is a television set or a personal computer, then its communication section 1034 is a network interface that permits wired communication for transmitting and receiving various kinds of data via the Internet 1013. And for example, if the display device 1011 is a mobile phone, then its communication section 1034 is structured to include an antenna that permits wireless communication; the communication section 1034 transmits and receives various kinds of data through wireless communication with the base station 1014.

The display section 1035 is illustratively composed of a display device such as an LCD (liquid crystal display) or an organic EL (electro luminescence) device. The display section 1035 displays various pictures based on the picture data supplied from the control section 1033.

The audio output section 1036 is illustratively made up of speakers. Under control of the control section 1033, the audio output section 1036 outputs audio corresponding to the audio signal supplied from the control section 1033.

The vibration section 1037 is illustratively formed by a motor furnished with a decentered weight. Under control of the control section 1033, the vibration section 1037 vibrates in response to the signal which is supplied from the control section 1033 and which indicates a vibration pattern, thus causing the display device 1011 in part or as a whole to vibrate. For example, if the display device 1011 is a television set, then its vibration section 1037 is installed inside a remote controller was the operation input section 1031 and causes the remote controller as a whole to vibrate. And for example, if the display device 1011 is a mobile phone, then its vibration section 1037 is installed inside the enclosure of the display device 1011 and causes the device 1011 as a whole to vibrate.

By causing a CPU (central processing unit), not shown, to execute computer programs, the control section 1033 implements a selection section 1051, a tag read section 1052, a time information acquisition section 1053, a clock section 1054, a registered tag data generation section 1055, a registered tag count data generation section 1056, a communication control section 1057, a display control section 1058, an audio output control section 1059, and a vibration control section 1060.

The selection section 1051 is supplied with an operation signal from the operation input section 1031. In accordance with the operation signal from the operation input section 1031, the selection section 1051 selects the region in which the content subject to the tag registration is broadcast and the channel on which that content is broadcast.

More specifically, the selection section 1051 selects the region and the channel based on the operation signal which is supplied from the operation input section 1031 and which corresponds to the user's operations to select the region in which the content subject to the tag registration is broadcast and the channel on which that content is broadcast. The selection section 1051 then supplies region information and channel information indicating the selected region and channel to the registered tag data generation section 1055 and display control section 1058.

The tag read section 1052 is supplied with the operation signal from the operation input section 1031. In accordance with the operation signal from the operation input section 1031, the tag read section 1052 reads the tag (expressive of an emotion) designated to be registered by the user.

More specifically, based on the operation signal which is supplied from the operation input section 1031 and which corresponds to the user's operations to designate the tag to be registered, the tag read section 1052 selects the tag (expressive of an emotion) designated to be registered from among the tags representing a plurality kinds of emotions stored in the storage section 1032.

The tag read section 1052 supplies the registered tag data generation section 1055 with the tag ID of the tag (Fig. 19) read from the storage section 1032, and supplies the display control section 1058 with the icon image data and color data in association with the tag ID. And, the tag read section 1052 supplies the audio output control section 1059 with the sound data of the tag read from the storage section 1032, and supplies the vibration control section 1060 with the vibration pattern data.

And, in accordance with the operation signal which is supplied from the operation input section 1031 and which corresponds to the user's operations to designate the tag to be registered, the tag read section 1052 supplies the time information acquisition section 1053 with the designation to acquire the time at which the tag designate to be registered.

Based on the designation from the tag read section 1052, the time information acquisition section 1053 acquires the clock section 1054 the time information indicating the time (current time) at which the tag was designated to be registered. The time information acquisition section 1053 supplies the time information acquired from the clock section 1054 to the registered tag data generation section 1055.

The clock section 1054 outputs the time-of-day (in year, month, day, hours, minutes, and seconds) of the current time, and supplies what is output as the time information to the time information acquisition section 1053 and registered tag count data generation section 1056.

The registered tag data generation section 1055 generates the registered tag data in Fig. 20 and supplies the generated data to the storage section 1032. More specifically, given the tag ID from the tag read section 1052, the registered tag data generation section 1055 generates the registered tag data in Fig. 20 based on the tag ID, on the region information and channel information supplied from the selection section 1051, on the time information supplied from the time information acquisition section 1053, and on a preset user ID. The registered tag data generation section 1055 supplies the registered tag data thus generated to the storage section 1032.

Based on the registered tag data in the storage section 1032, the registered tag count data generation section 1056 generates the registered tag count data in Fig. 21 illustratively per unit time, and supplies the generated data to the storage section 1032, communication control section 1057, and display control section 1058.

More specifically, the registered tag count data generation section 1056 the storage section 1032 for the registered tag data having illustratively the time information indicating an interval (i.e., time period) of the unit time starting from the current time output by the clock signal 1054 as a given start rime accurate to the unit time (the data may be called the time-matched registered tag data hereunder where appropriate).

Furthermore, the registered tag count data generation section 1056 divides the time-matched registered tag data into registered tag data groups each having the same region and channel information, and counts the number of registered tag data having each of different tag ID values with regard to each of the registered tag data groups (i.e., registered tag counts).

And with regard to each group, the registered tag count data generation section 1056 generates the registered tag count data in Fig. 21 by arraying the region information and channel information corresponding to the group in question, the unit time information representing the start time and the unit time, and the number of registered tag data having each of different tag ID values, in that order.

For example, suppose that the unit time is one minute; that the current time output by the clock section 1054 accurate to the unit time is 10:24, February 10, 2007; that the storage section 1032 retains as many as ten registered tag data which share the same region and channel information and each of which has the time information indicating a time-of-day within a one-minute time period (i.e., unit time) starting from 10:24, February 10, 2007 (i.e., start time); and that of 10 registered tag data, six have the tag ID of 001, one has the tag ID of 003, and three have the tag ID of 004. In this case, the registered tag count data generation section 1056 generates the registered tag count data including the unit time information constituted by information indicating 10:24, February 10, 2007 as the start time and by information indicating that the unit time is one minute, the registered tag count of "6" as the number of registered tags having the tag ID of 001, the registered tag count of "1" as the number of registered tags having the tag ID of 003, and the registered tag count of "3" as the number of registered tags having the tag ID of 004. Meanwhile, the unit time such as the one-minute, period may be set beforehand illustratively by the user.

In the ensuing description, the time period of the unit time from the start time may be called a slot hereunder where appropriate.

The communication control section 1057 is made up of a transmission control section 1071 and a reception control section 1072, and controls the transmission or reception by the communication section 1034 of various data through communication via networks such as the Internet 1013 or through wireless communication with the base station 1014.

The transmission control section 1071 controls the transmission of the communication section 1034. That is, the transmission control section 1071 supplies various data to the communication section 1034 and causes the communication section 1034 to transmit the various data via the network.

For example, the transmission control section 1071 causes the communication section 1034 to transmit to the tag management server 1012 the registered tag count data supplied from the registered tag count data generation section 1056.

The reception control section 1072 controls the reception of the communication section 1034. That is, the reception control section 1072 causes the communication section 1034 to receive various data transmitted via the network and acquires the data received by the communication section 1034.

For example, the reception control section 1072 causes the communication section 1034 to receive data (e.g., other user-registered tag count data, to be discussed later) which is transmitted from the tag management server 1012 and which includes the value representing the number of tags designated to be registered by some other user. The reception control section 1072 supplies the display control section 1058 with the data received by the communication section 1034.

The display control section 1058 controls the display of the display section 1035 based on the region information and channel information supplied from the selection section 1051, on the icon image data and color data supplied from the tag read section 1052, on the registered tag count data supplied from the registered tag count data generation section 1056, and on the other user-registered tag count data supplied from the communication control section 1057 (reception control section 1072). For example, the display control section 1058 causes the display section 1035 to display a suitable icon based on the icon image data and color data supplied from the tag read section 1052. The control of the display by the display control section 1058 will be described later in detail.

The audio output control section 1059 controls the audio output of the audio output section 1036. That is, the audio output control section 1059 causes the audio output section 1036 to output audio based on the sound data supplied from the tag read section 1052.

The vibration control section 1060 controls the vibration of the vibration section 1037. That is, the vibration control section 1060 causes the vibration section 1037 to vibrate based on the vibration pattern data supplied from the tag read section 1052.

Fig. 22 is a block diagram shawing a typical hardware structure of the tag serves

The tag server 1012 in Fig. 22 is made up of a CPU (central processing unit) 1091, a ROM (read only memory) 1092, a RAM (random access memory) 1093, a bus 1094, an input/output interface 1095, an input section 1096, an output section 1097, a storage section 1098, a communication section 1099, a drive 1100, and removable media 1101.

The CPU 1091 performs various processes in accordance with the programs stored in the ROM 1092 or in the storage section 1098. The RAM 1093 stores the programs or data to be performed or operated on by the CPU 1091 as needed. The CPU 1091, ROM 1092, and RAM 1093 are interconnected with one another by the bus 1094.

The CPU 1091 is also connected with the input/output interface 1095 via the bus 1094.

The input/output interface 1095 is connected with the input section 1096 typically made of a keyboard, a mouse and a microphone, and with the output section 1097 typically composed of a display and speakers. The CPU 1091 performs various processes in response to commands input from the input section 1096. And the CPU 1091 outputs the result of the processing to the output section 1097.

The storage section 1098 connected to the input/output interface 1095 is typically formed by a hard disk, and stores the programs to be performed by the CPU 1091 and the data to be transmitted to the display device 1011.

The communication section 1099 communicates with external equipment such as the display device 1011 through networks such as the Internet 1013 and a local area network or via the base station 1014.

The drive 1100 connected to the input/output interface 1095 drives the removable media 1101 such as a magnetic disk, an optical disk, a magneto-optical disk, or a semiconductor memory when such a piece of the media is into the drive 1100. The drive 1100 acquires the programs or data recorded on the loaded media. The acquired programs and data are transferred as needed to the storage section 1098 and stored therein.

Fig. 23 is a block diagram showing a typical functional structure implemented by the CPU 1091 of the tag management server 1012 performing programs.

As shown in Fig. 23, by getting the CPU 1091 to carry out programs, the tag management server 1012 functions as a reception control section 1111, a registered tag count totaling section 1112, and a transmission control section 1113.

The reception control section 1111 controls the reception of the communication section 1099 (Fig. 22). For example, the reception control section 1111 causes the communication section 1099 to receive various data transmitted from the display device 1011. More specifically, the reception control section 1111 illustratively causes the communication section 1099 to receive the registered tag count data transmitted from the individual display devices 1011, and supplies the received data to the registered tag count totaling section 1112.

Based on the registered tag count data supplied from the reception control section 1111, the registered tag count totaling section 1112 totals per tag ID the number of tags designated to be registered with regard to the content identified by the same region information and the same channel information over the same time period. More specifically, given the registered tag count data transmitted from the individual display devices 1011, the registered tag count totaling section 1112 takes the registered tag count data having the same region information, the same channel information, and the same unit time information as the target to be totaled, and totals the number of registered tags per tag ID in the targeted registered tag count data. The registered tag count totaling section 1112 generates all user-registered tag count data associating the registered tag counts totaled per tag ID with the region information, channel information, and unit time information in the registered tag count data targeted to be totaled. The registered tag count totaling section 1112 supplies the generated data to the storage section 1098 (Fig. 22) and transmission control section 1113. In this case, it is assumed that the structure of the all user-registered tag count data is the same as the structure of the registered tag count data in Fig. 21.

The transmission control section 1113 controls the transmission of the communication section 1099. For example, the transmission control section 1113 causes the communication section 1099 to transmit various data. Illustratively, the transmission control section 1113 supplies the communication section 1099 (Fig. 22) with the data based on the all user-registered tag count data supplied from the registered tag count totaling section 1112, and causes the communication section 1099 to transmit the data.

More specifically, the transmission control section 1113 supplies the communication section 1099 illustratively with average registered tag count data having, as the registered tag count per tag ID, the value obtained by dividing the registered tag count per tag ID in the all user-registered tag count data by the number of display devices 1011 having transmitted the registered tag count data which served as the basis for generating the all user-registered tag count data. The transmission control section 1113 then causes the communication section 1099 to transmit the data to the display devices 1011.

And, the transmission control section 1113 illustratively takes one of the multiple display devices 1011 having transmitted the registered tag count data as the device of interest, and supplies the communication device 1099 with other user-registered tag count data having, as the registered tag count per tag ID, the value obtained by dividing the registered tag count per tag ID in the all user-registered tag count data minus the registered tag count per tag ID in the registered tag count data transmitted from the device of interest, by the number of all display devices 1011 having transmitted the registered tag count data minus the device of interest (i.e., number of all display devices 1011 having transmitted the registered tag count data, minus 1). The transmission control section 1113 then causes the communication section 1099 to transmit the data to the device of interest. That is, the tag management server 1012 transmits to the device of interest the average value of the numbers of tags which were designated to be registered by users other than the user of the device of interest and which express the same emotion.

Explained next is how display is controlled by the display control section 1058 (Fig. 18) in the display device 1011.

For example, if the operation input section 1031 is operated to select a mode in which to register tags (i.e., tag registration mode), then the display control section 1058 causes the display section 1035 to display a tag display window in which to display the icons representing tags in the positions which correspond to the times when the tags were designated to be registered and which correspond to the numbers of the tags registered at these times.

Furthermore, if the operation input section 1031 is operated to input region information and channel information, then the display control section 1058 displays in the tag display window the region information and channel information supplied from the operation input section 1031 via the selection section 1051.

Fig. 24 is a view showing a typical tag display window displayed on the display section 1035 by the display control section 1058.

As shown in Fig. 24, the tag display window 1131 is made up of a channel selection area 1151, icon buttons 1152, an icon display area 1153, a pointer 1154, and a MENU button 1155 (constituting a GUI (graphic user interface)).

In Fig. 24, in the top right corner of the tag display window 1131 appear an indication "2007/2/10 (SAT) 10:24" showing that the current time is 10:24, Saturday, February 10, 2007; an indication "TOKYO" showing that Tokyo is the region in which is broadcast the content subject to the tag registration (i.e., content identified by the region information and channel information supplied from the selection section 1051 to the display control section 1058); and an indication "081 ch" showing that channel 81 is the channel on which the content in question is broadcast.

The channel selection area 1151 is an area that displays the channel represented by the channel information supplied from the selection section 1051 to the display control section 1058. In Fig. 24, the channel in the channel selection area 1151 is "081," which is the same as the channel indicated in the top right corner of the tag display window 1131.

In this case, the program (i.e., content) currently broadcast on the channel displayed in the channel selection area 1151 is the content subject to the tag registration or the content targeted for the display of tag registration status (called the target content hereunder where appropriate).

The icon buttons 1152 are buttons indicative of the candidate tags to be designated for registration by the user. The pictures of the icon buttons 1152 are displayed based on the icon image data of the tags. The types of icon buttons 1152 displayed in the tag display window 1131 are changed when the MENU button 1155, to be described later, is selected.

The icon display area 1153 is an area that displays the icons based on the icon image data of the tags read by the tag read section 1052 in accordance with the registered tag count data (Fig. 21) stored in the storage section 1032 (including the average registered tag count and other user-registered tag count data as needed). In the icon display area 1153, the horizontal axis is the time base representing time. The vertical axis represents the number of tags registered with regard to the target content, i.e., the number of registered tag data that have been generated.

Although the time base here in Fig. 24 represents one hour ranging from 10:00 to 11:00, the time represented by the time base may alternatively be any other time unit than the one-hour unit. And, the time represented by the time base may be one hour or other suitable time period starting from the time at which the tag registration mode is selected by the user, for example.

The pointer 1154 indicating the current time is displayed in that position on the time base which corresponds to the current time in the icon display area 1153. As time elapses, the pointer 1154 moves in the rightward direction in Fig. 24. The current time displayed in the top right corner of the tag display window 1131 is the same as the time at which the pointer 1154 is positioned.

MEND button 1155 is selected to determine or charge various settings regarding the display of the tag display winnow 1131. For example, the MENU button 1155 is selected to determine the region or the channel in or on which the target content is broadcast, or to change the types of icon burtons 1152 to be selected by the user.

When the above-described tag display window 1131 is displayed, the user operates the operation input section 1031 to manipulate the icon buttons 1152 expressive of the user's emotions toward the target content. In this case, the operation input section 1031 supplies the control section 1033 with the operation signal for designating registration of the tag which corresponds to the icon button 1152 reflecting the user's operation and which expresses the user's emotion.

In the control section 1033, the operation signal from the operation input section 1031 is supplied to the tag read section 1052. In accordance with the operation signal which comes from the operation input section 1031 and which designates the tag to be registered, the tag read section 1052 reads the tag from the storage section 1032 and supplies the tag ID of the read tag to the registered tag data generation section 1055. Given the tag ID of the tag from the tag read section 1052, the registered tag data generation section 1055 registers the tag with regard to the target content.

That is, suppose now that the tag of which the tag ID is supplied from the tag read section 1052 to the registered tag data generation section 1055 is the target tag. In this case, by taking the tag ID of the target tag supplied from the tag read section 1052 as a trigger, the registered tag data generation section 1055 generates registered tag data (Fig. 20) having the tag ID of the target tag with regard to the target content.

More specifically, the registered tag data generation section 1055 recognizes the region information and channel information supplied from the selection section 1051 as the region information and channel information about the target content and, given the time information from the time information acquisition section 1053 when the tag ID of the target tag is supplied from the tag read section 1052, recognizes the supplied time information as the time information indicative of the time at which the tag was designated to be registered.

Furthermore, the registered tag data generation section 1055 generates the registered tag data about the target content by arraying the region information and channel information about the target content, the time information from the time information acquisition section 1053, the tag ID of the target tag from the tag read section 1052, and the user ID, in that order. The registered tag data generation section 1055 supplies the generated data to the storage section 1032 for storage therein.

Meanwhile, every time the unit time has elapsed, the registered tag data generation section 1056 references the registered tag data stored in the storage section 1032 with regard to the target content so as to generate the registered tag data in Fig. 21 having the unit time information representing the slot, i.e., the unit time period from the start time. The registered tag data generation section 1055 supplies the generated data to the display control section 1058.

As described above, based on the registered tag count data supplied from the registered tag count data generation section 1056 with regard to the target content, the display control section 1058 displays the icon in that position of the icon display area 1153 which is determined by the horizontal axis position representing the start time of the unit time information held in the registered tag count (Fig. 21) and by the vertical axis position representative of the registered tag count held in the same registered tag count data.

That is, given the registered tag count data about the target content from the registered tag count data generation section 1056, the display control section 1058 selects as display-targeted registered tag count data the registered tag count data of which the start time is that of the time period indicated on the horizontal axis of the icon display area 1153, and takes one of the selected data as the registered tag count data with regard to the tag of interest.

Furthermore, the display control section 1058 selects the tag ID of one of the registered tag counts per tag ID in the registered tag count data of the tag of interest, e.g., the tag ID of the largest registered tag count (called the maximum registered count hereunder where appropriate) as a display-use tag ID, and acquires the icon image data of the tag identified by the display-use tag ID from the storage section 1032 via the tag read section 1052.

And the display control section 1058 displays the icon corresponding to the tag identified by the display-use tag ID, in that position of the icon display area 1153 which is defined by the horizontal axis position representing the start time of the unit time information held in the registered tag count data of the tag of interest and by the vertical axis position representative of the maximum registered count as the registered tag count of the display-use tag ID, the icon display being based on the icon image data from the tag read section 1052.

The display control section 1058 displays icons as described above by taking the display-targeted registered tag count data successively as the registered tag count data of the tag of interest.

Meanwhile, in the icon display area 1153, every time the registered tag count is incremented illustratively by 1, the icon is displayed in the position elevated by half the vertical length of the icon.

And in the foregoing case, only the tag ID of one of the registered tag counts per tag ID in the registered tag count data of the tag of interest is selected as the display-use tag ID, and the icon corresponding to the tag identified by the display-use tag ID is displayed. Alternatively, the tag IDs of at least two of the registered tag counts per tag ID in the registered tag count data of the tag of interest may be selected as display-use tag IDs, and the icons (at least two icons) identified respectively by these at least two display-use tag IDs may be displayed.

Furthermore, in the foregoing case, the icon is displayed based on the registered tag count data generated from the registered tag data stored in the storage section 1032. Alternatively, the icon may be displayed based on the average registered tag count data or on the other user-registered tag count data transmitted from the tag management server 1012 (Fig. 17) to the display device 1011.

And it is possible to perform selectively either the display of icons based on the registered tag count data generated from the registered tag data stored in the storage section 1032 (the data may be called self-registered tag count data hereunder where appropriate), or the display of icons based on the other user-registered tag count data (or average registered tag count data) from the tag management server 1012 (Fig. 17). It is also possible to perform both types of icon display, i.e., to display icons based both on the self-registered tag count data and on the other user-registered tag count data.

For example, if icons are displayed solely based on the self-registered tag count data, the user can understand (verify) his or her own emotions toward the target content, and by extension his or her specific evaluations of the target content.

And if icons are displayed solely based on the other user-registered tag count data, the user can understand the other users' emotions toward the target content, and by extension the other users' specific evaluations of the target content.

Furthermore, where icons are displayed based both on the self-registered tag count data and on the other user-registered tag count data, the user can understand the differences or coincidences between the user's own emotions toward the target content and the other users' emotions toward the same content.

As described above, the icon representing the tags registered with regard to the target content is displayed in that position of the icon display area 1153 which is defined by the horizontal axis position representing the start time and by the vertical axis position representative of the number of the tags registered with regard to the target content in the slot constituting a unit time period from the start time. This allows the user intuitively to understand the other users' evaluations of the target content illustratively in each of the slots constituting specific portions of the target content.

In the example of Fig. 24, the smallest increment on the scale of the time base is one minute conforming to the unit time information in the registered tag count data. In accordance with the number of tags designated to be registered in one minute as the unit time, the display position in the vertical direction of an icon representing the tags is determined. And in conformance with the one-minute increment on the scale of the time base, the number of times a tag may be registered is limited per minute. For example, the number of times a tag may be registered per minute is limited to 20. Also, the smallest increment on the scale of the time base is not limited to one minute; it may be varied depending on the display resolution of the display section 1035. And the unit time indicated by the unit time information in the registered tag count data may be varied depending an the varying smallest increment on the time base scale.

Fig. 25 is a flowchart showing the process of registering tags performed by the display device 1011 and the process of totaling registered tags carried out by the tag management server 1012 in the tag registration system of Fig. 17.

The display device 1011 starts the process of registering tags with regard to the content illustratively when the operation input section 1031 is operated to select the tag registration mode.

In the tag registration mode, when the user operates the operation input section 1031 to select the region and the channel in and on which the target content is broadcast, the operation input section 1031 supplies the selection section 1051 with an operation signal corresponding to the user's operations.

In step S511, in response to the operation signal from the operation input section 1031, the selection section 1051 selects the region and the channel in and on which the target content is broadcast, and supplies the registered tag data generation section 1055 and display control section 1058 with region information and channel information indicating the region and the channel respectively. Control is then passed on to step S512.

In step S512, the display control section 1058 causes the display section 1035 to display the tag display window 1131 (Fig. 24) reflecting the region information and channel information supplied from the selection section 1051. Control is then passed on to step S513.

In step S513, the display control section 1058 starts the pointer 1154 along the time base of the icon display area 1153 in the tag display window 1131. Control is then passed on to step S514.

In step S514, the tag read section 1052 checks whether any tag is designated to be registered. More specifically, the tag read section 1052 checks whether the operation input section 1031 has supplied an operation signal corresponding to the operation performed on one of the icon buttons 1152 in the tag display window.

If in step S514 a tag is found designated to be registered, then step S515 is reached. In step S515, the tag read section 1052 reads the tag designated to be registered from the storage section 1032. In other words, the tag read section 1052 reads from the storage section 1032 the tag corresponding to one of the icon buttons 1152 which was operated by the user in the tag display window 1131.

Furthermore, in step S515, the tag read section 1052 supplies the registered tag data generation section 1055 with the tag ID of the tag read from the storage section 1032.

And, the tag read section 1052 supplies the time information acquisition section 1053 with designation to acquire the time at which the tag was designated to be registered. From step S515, control is passed on to step S516.

In step S516, based on the designation from the tag read section 1052, the time information acquisition section 1053 acquires from the clock section 1054 the time information indicating the time at which the tag was designated to be registered, and supplies the acquired information to the registered tag data generation section 1055. Control is then passed on to step S517.

In step S517, the registered tag data generation section 1055 generates the registered tag data in Fig. 20 based on the region information and channel information from the selection section 1051, on the tag ID of the tag from the tag read section 1052, on the time information from the time information acquisition section 1053, and on a preset user ID. The registered tag data generation section 1055 supplies the generated data to the storage section 1032. Control is then passed on to step S518.

Meanwhile, if in step S514 no tag was found designated to be registered, then steps S515 through S517 are skipped and step S518 is reached.

In step S518, based on the current time output from the clock section 1054, the registered tag count data generation section 1056 checks whether a unit time has elapsed from the most recent start time.

If in step S518 the unit time is not found to have elapsed yet, then control is returned to step S514, and steps S514 through S517 are repeated.

Meanwhile, if in step S518 the unit time is found to have elapsed, then step S519 is reached. In step S519, the registered tag count data generation section 1056 generates registered tag count data (self-registered tag count data) using the registered tag data stored in the storage section 1032 and supplies the generated data to the storage section 1032 for storage therein as well as to the communication control section 1057 and display control section 1058. Control is then passed on to step S520.

In step S520, the transmission control section 1071 causes the communication section 1034 to transmit the self-registered tag count data supplied from the registered tag count data generation section 1056.

Meanwhile in the tag management server 1012, the reception control section 1111 (Fig. 23) in step S531 causes the communication section 1099 (Fig. 22) to receive the registered tag count data transmitted from the individual display devices 1011, and supplies the received data to the registered tag count totaling section 1112 (Fig. 23). Control is then passed on to step S532.

In step S532, the registered tag count totaling section 1112 totals the registered tag count per tag ID in the registered tag count data having the same region information, the same channel information, and the same unit time information out of the registered tag count data received in step S531. The registered tag count totaling section 1112 supplies all user-registered tag count data thus acquired to the storage section 1098 for storage therein as well as to the transmission control section 1113. Control is then passed on to step S533.

In step S533, the transmission control section 1113 acquires other user-registered tag count data based on the all user-registered tag count data supplied from the registered tag count totaling section 1112. The transmission control section 1113 supplies the acquired data to the communication section 1099 and causes the communication section 1099 to transmit the data to the display device 1011.

Thereafter, control is returned from step S533 to step S531 and the subsequent steps are similarly repeated.

Meanwhile in the display device 1011, the reception control section 1072 in step S521 causes the communication section 1034 to receive the other user-registered tag count data transmitted from the tag management server 1012, and supplies the received data to the display control section 1058. Control is then passed on to step 5522.

In step S5221 as explained above in reference to Fig. 24, the display control section 1058 causes the icon display area 1153 in the tag display window 1131 to display either the icons based on the self-registered tag count data supplied from the registered tag count data generation section 1056, or the icons based on the other user-registered tag count data supplied from the reception control section 1072, or both types of icons. Control is then returned to step S514 and the subsequent steps are similarly repeated illustratively until the tag registration mode is canceled.

In step S522, the display control section 1058 receives from the tag read section 1052 the supply of the icon image data and color data regarding the tags stored in the storage section 1032, and displays the icons based on the supplied icon image data and color data.

And when the user designates a tag to be registered, sounds may be output and vibrations may be generated based on the sound data and vibration pattern data regarding the tag designated to be registered. More specifically, the tag read section 1052 may supply the audio output control section 1059 and vibration control section 1060 respectively with the sound data and vibration pattern data about the tag designated to be registered, thereby causing the audio output section 1036 to output audio and the vibration section 1037 to vibrate.

In this manner, while viewing a content, the user can select the icon burtons 1131 in the tag display window 1131 so as to designate simply and intuitively the two be registered with regard to the any can understand the icons registered substantially in real time by the other users viewing the same content.

As described above, the display device 1011 acquires the registered tag count data regarding the number of registered tag data including both the tag ID as the identification information identifying the tag designated to be registered by the user regarding the content (target content) from among the tags expressive of emotions and the time information indicating the time at which the user designated the tag to be registered; and controls the display, based on the registered tag count data, of the icon expressive of the emotion represented by the tag identified by the tag ID, in the position defined by the horizontal axis position representing a given time and by the vertical axis position representing the number of registered tag data having the same tag ID in the registered tag data having the time information indicating the time included in a unit time covering that given time, inside the display area (i.e., icon display area 1153) defined by the horizontal axis (time base) as a first axis representing time and by the vertical axis as a second axis representing the number of registered tag data. This allows the user intuitively to understand the evaluation of another user illustratively with regard to a particular portion of the target content.

In the icon display area 1153 described above, the horizontal axis represents time and the vertical axis represents the number of registered tag data. Alternatively, the horizontal axis may indicate the number of registered tag data and the vertical axis may indicate time.

And it was explained above that upon elapse of a unit time from the most recent start time, self-registered tag count data is generated from the registered tag data of the tags designated to be registered within that unit time and that an icon is displayed based on the self-registered tag count data thus generated. Alternatively, in registering the tag by the designation by the user in the display device 1011 regardless of the elapse of the unit time, every time a tag is designated to be registered, the icon corresponding to the tag may be displayed. That is, every time the registered tag data generation section 1055 generates registered tag data in response to the designation for registering a tag, the display control section 1058 may change the position in which to display the icon corresponding to the tag identified by the tag ID of the registered tag data.

In this manner, the user of the display device 1011 can verify in real time the changes in the position where the icon corresponding to the registered tag is displayed.

And it was also explained above that the content subject to the tag registration is the currently broadcasted television broadcast program. Alternatively, when a content that was broadcast in the past and recorded then is desired to be viewed, the display device 1011 may acquire from the tag management server 1012 the other user-registered tag count data for the desired content taken as the target content and display the icon based on the other user-registered tag count data thus acquired.

In this manner, the user can verify the evaluations of the recorded content made by the other users before viewing the content in question. That is, the user may determine whether or not to view the recorded content in view of the other users' evaluations. And, the display device 1011 may replace the time measured by the clock section 1054 with the time at which the recorded content was broadcast and may transmit to the tag management server 1012 the self-registered tag count data acquired by the user's designation to register tags. This allows the user to register new tags with regard to the recorded content in addition to the previously registered tags, so that the user may feel as if he or she is viewing the recorded content in real time.

It was explained above that displays are made in response to the tags designated to be registered by an unspecified number of users. Alternatively, displays may be made in response to the tags designated to be registered solely by previously registered users.

Fig. 26 is a view explanatory of a typical display on the display section 1035 during processing of registered tags where users are registered.

As shown in Fig. 26, under the tag display window 1131 appear pictures (silhouettes) of the users having logged in to designate tags (through their operations) to be registered from among the users who have executed the user registration, the names of the users, and channel information indicating the channels on which are broadcast the contents being viewed by the respective users.

In the example of Fig. 26, a user named "TARO" of a display device 1011 is viewing channel 81, another user named "HANAKO" of another display device 1011 is viewing channel 51, and another user named "MIKA" of yet another display device 1011 is viewing channel 81. The icon shown overlaid on the silhouette of the user named "MIKA" corresponds illustratively to the tag designated to be registered by the user named "MIKA" within the past one to two minutes from the present time.

The above is implemented illustratively when the reception control section 1072 (Fig. 18) acquires via the tag management server 1012 the registered tag data of the tag designated to be registered by some other registered user and the display control section 1058 (Fig. 18) controls the display of the display section 1035 (Fig. 18) based on the registered tag data of the other user.

In this manner, the users can understand between themselves who designated which tag to be registered with regard to the content on which channel.

And in Fig. 26, the icon corresponding to the tag designated to be registered by a user need not be shown overlaid on the silhouette (picture) of that user. Instead, the silhouettes representing the users having logged in may be formed into avatars whose facial expressions are made variable, so that when a tag is designated to be registered by any one of the users, the facial expression of the avatar representing that user may be changed correspondingly. And at this point, the facial expression of the avatar may be accompanied by the output of corresponding audio such as laughs or cries.

In this manner, when the tag display window 1131 is displayed along with information indicative of status between the registered users, each user can feel as if he or she is viewing the content accompanied by someone close to that user.

Furthermore, as shown in Fig. 27, the registered users may be allowed to have a chat between them. This may be implemented illustratively by supplementing the tag management server 1012 (Fig. 17) with a chat server capability.

In the example of Fig. 27, five users have logged in: a user named "TARO," a user named "HANAKO," a user named "MIKA," a user named "HIDE," and a user named "MAMORU." These five users may be arranged to have a chat between them.

And in Fig. 27, the content on channel 81 viewed by the user named "TART" of the display device 1011 is also viewed by the user named "MIKA" and the user named "HIDE" on the same channel. That is, of the five users having logged in, three users are viewing the content on channel 81. At this point, based illustratively on log-in information from the tag management server 1012 acting as a chat server, the display control section 1058 causes an indication "Login 3/5 (same ehannel/all)" to appear immediately below the tag display window 1131, the indication showing the number of users who have logged in.

In this manner, given the display showing how many users are viewing the content on the same channel, the users can easily understand how many of the log-in users took action on (i.e., designated) tags to be registered when icons are displayed in the tag display window 1131 as a result of the designation of the tags.

And, the registered users may be allowed to give each other a suitable display about another user who designated the same tag to be registered at the same time with regard to the same content, i.e. about the user who synchronized (e.g., the display may illustratively say "In sync with another user!").

The above may be implemented illustratively as follows: every time the registered tag data generation section 1055 (Fig. 18) generates registered tag data (Fig. 20), each of the display devices 1011 operated by the registered users may transmit the registered tag data to the tag management server 1012. Given the registered tag data transmitted from the individual display devices 1011, the tag management server 1012 may transmit a request for the display "In sync with another user!" or the like to the display devices 1011 operated by the users identified by the user In the registered tag data having the same region information, the same channel information, the same time information, and the same tag ID.

Here, whether or not any users have synchronized with each other is determined is as follows.

Namely, the tag management server 1012 illustratively is supplied with registered tag data (Fig. 20) having the same tag ID from the individual display devices 1011. Given the registered tag data having the time information indicating the times included in a predetermined time period of, say, ten seconds, what may be called the rate of synchronism is obtained as representative of the proportion of the registered tag data having the time information indicating the times included in a time period so short as to be regarded as the same time (e.g., one to two seconds). If the rate of synchronism is found to be equal to or higher than a predetermined threshold value, then synchronism is considered to exist between the users identified by the user IDs in the registered tag data having the time information indicating the times included in that short time period.

When the rate of synchronism is obtained in this manner with regard to the tags designated to be registered by users viewing the same content, a match can be established between the users.

In this case, if a match is established not only between the registered users but also between an unspecified number of users, then the matching users may get a chance to communicate with someone new.

For example, the user IDs in the registered tag data may each be arranged to include information regarding not only user names but also nationalities and gender distinctions. This may permit exchanges of information between the users having designated the same tags to be registered in the same scenes of the same content.

Meanwhile, in the tag display window 1131 (Fig. 24) displayed on the display section 1035 of the display device 1011, the icon buttons 1152 and the background of the icon display area 1153 may be varied when displayed depending on the kind (genre) of the content.

More specifically, based illustratively on the information indicative of the future times of day at which contents of particular genres (e.g., live broadcast of sports such as baseball and soccer, comical performance programs) are to be broadcast, the display device 1011 may in advance download from the tag management server 1012 the tags relevant to the tags of the programmed contents and the background image data for providing backgrounds of the icon display area 1153. This permits changes to be made in the display of the icon buttons 1152 and in the background of the icon display area 1153. Alternatively, the point in time at which the display device 1011 downloads the tags and background image data may be when the user views the content, i.e., when the tag registration mode is selected on the display device 1011.

In this manner, the user may designate tags to be registered in keeping with the atmosphere of the content to be viewed.

And where the display device 1011 is a mobile phone, the channel information indicating the channel selected by the selection section 1051 (Fig. 18) may be transmitted in infrared rays via the communication section 1034. This makes it possible to interconnect two capabilities: the function of changing channels of television broadcast programs to be displayed on a particular television set using infrared rays, and the process of permitting selection of the channel on which the content (television broadcast program) subject to the tag registration is being broadcast.

In this manner, the user operating the display device 1011 acting as a remote controller of the television set may change channels for the contents to be viewed and cause the display device 1035 to display the tag display window 1131 (Fig. 24) in keeping with the changed channel. And, conversely, the user may be allowed to change the channel of the television set to the channel on which a desired content is broadcast while verifying status of the icons (i.e., tags registered by some other display device 1011) displayed corresponding to the channel in the tag display window 1131.

And in another example, the number of times a particular tag (e.g., a tag identified by the tag ID of 001) was designated to be registered by some other user with regard to the content broadcast on a given channel within a predetermined time period may turn out to be equal to or larger than a predetermined value. If that is the case, the channel changing function may be used automatically to change the channel of the television set to that particular channel.

Furthermore, where the above-described user registration is in place, the display device 1011 may be arranged to display the tag display window 1131 corresponding to the channel selected by some other registered user who has carried out a channel changing operation and to change the channel of the television set accordingly to that channel.

When the changing of the channel on which to view the content is interconnected with the selection of the channel in the tag display window 1131 as described above, the user may have a more extensive selection of contents on terms of genres.

It was explained above the present invention is embodied as the content reproduction device such as a mobile phone, a HDD recorder, or a personal computer. Alternatively, the present invention may be illustratively practiced as information processing apparatus capable of reproducing contents such as a television set or PDA (personal digital assistant).

The series of steps and processes described above may be executed either by hardware or by software. Where the software-based processing is to be carried out, the programs constituting the software may be installed into the storage section 32 from the removable media 39 via the control section 33 and also into the storage section 1032 from the removable media 39 via the control section 1033.

In this specification, the steps describing the programs stored on the removable media 39 and 1039 represent not only the processes that are to be carried out in the depicted sequence (i.e., on a time series basis) but also processes that may be performed parallelly or individually and not necessarily in chronological sequence.

And it should be understood by those skilled in the art that various modifications, combinations, subcombinations and alterations may occur depending on design requirements and other factor in so far as they are within the scope of the appended claims or the equivalents thereof.

## Claims

1. An information processing apparatus comprising:

   reproduction controlling means for controlling reproduction of a content which varies dynamically over a predetermined time period;
   reading means for reading tag information which has been stored beforehand and which represents tags to be attached to said content in response to designation by a user to attach said tags as a subjective evaluation of said user regarding said content being reproduced;
   acquiring means for acquiring time information indicating times into said content at which the attachment of said tags is designated by said user; and
   storing means for storing said time information and said tag information in association with one another.

2. The information processing apparatus according to claim 1, wherein said tag information is structured to include tag identification information for identifying said tag information, display information for displaying icons representing said subjective evaluation of said user, and audio information for giving audio output representing said subjective evaluation of said user; and
   wherein said storing means stores said time information and said tag identification information as part of said tag information in association with one another.

3. The information processing apparatus according to claim 2, further comprising display controlling means for controlling display of a time base serving as reference to the times into said content being reproduced, said display controlling means further controlling display of said icons in those position on said time base which represent the times indicated by said time information, based on said time information and on said display information included in said tag information identified by said tag identification information.

4. The information processing apparatus according to claim 3, wherein said display controlling means controls the icon display in such a manner that if a plurality of identical icons are to be displayed close to one another, the closely displayed icons are replaced by another icon nearby which varies in size in proportion to the number of the replaced icons.

5. The information processing apparatus according to claim 2, further comprising audio output controlling means for controlling the audio output at the times indicated by said time information on said content being reproduced, based on said time information and on said audio information included in said tag information identified by said tag identification information.

6. The information processing apparatus according to claim 2, wherein said tag information is structured to further include vibration pattern information indicating vibration patterns in which said information processing apparatus is vibrated;
   said information processing apparatus further comprising vibration controlling means for controlling generation of vibrations at the times indicated by said time information over said content being reproduced, based on said time information and on said vibration pattern information included in said tag information identified by said tag identification information.

7. The information processing apparatus according to claim 1, further comprising inputting means for inputting designation from said user operating said inputting means to attach any of the tags preselected by said user from said tags represented by said tag information, the attached tag being representative of the operation performed by said user.

8. An information processing method comprising the steps of:

   controlling reproduction of a content which varies dynamically over a predetermined time period;
   reading tag information which has been stored beforehand and which represents tags to be attached to said content in response to designation by a user to attach said tags as a subjective evaluation of said user regarding said content being reproduced;
   acquiring time information indicating times into said content at which the attachment of said tags is designated by said user; and
   storing said time information and said tag information in association with one another.

**9.** A program comprising the steps of:

controlling reproduction of a content which varies dynamically over a predetermined time period;

reading tag information which has been stored beforehand and which represents tags to be attached to said content in response to designation by a user to attach said tags as a subjective evaluation of said user regarding said content being reproduced;

acquiring time information indicating times into said content at which the attachment of said tags is designated by said user; and

controlling storing to store said time information and said tag information in association with one another.

**10.** An information processing apparatus comprising:

acquiring means for acquiring registration count information about the number of registration information including identification information and time information, said identification information being included in and making identification of tags which represent emotions and which are designated by a user to be registered as representative of said emotions regarding a content, said time information being indicative of times at which said user designates the registration of said tags; and

display controlling means for controlling, based on said registration count information, display of icons expressing the emotions represented by the tags identified by said identification information;

inside a display area defined by a first axis representing times and by a second axis representing the number of said registration information;

in positions defined by the positions on said first axis representing predetermined times and by the position on said second axis representing the number of said registration information having the same identification information from among said registration information having said time information indicating the times included in a predetermined unit time covering said predetermined times.

**11.** The information processing apparatus according to claim 1, further comprising generating means for generating said registration information in accordance with the tag registration designated by said user;

wherein said acquiring means acquires said registration count information by generating said registration count information using said registration information generated by said generating means.

**12.** The information processing apparatus according to claim 1, wherein said acquiring means acquires said registration count information from another apparatus, the acquired registration count information having been generated in accordance with the tag registration designated by another user.

**13.** The information processing apparatus according to claim 3, wherein said acquiring means acquires the registration count information about the number of said registration information totaled for each of said identification information, said registration information having been generated in accordance with the tag registration designated by a plurality of other users.

**14.** The information processing apparatus according to claim 1, wherein said registration information further includes region information indicating the region in which the content subject to the tag registration is broadcast and channel information indicating the channel on which said content is broadcast; and

wherein said display controlling means controls, based on said registration count information, display of icon expressing the emotions represented by the tags identified by said identification information;

inside said display area;

in the positions defined by the positions on said first axis representing said predetermined times and by the position on said second axis representing the number of said registration information having the same region information, said channel information and said identification information, from among said registration information having said time information indicating the times included in a predetermined unit time covering said predetermined times.

**15.** The information processing apparatus according to claim 1, wherein the content subject to the tag registration is a television broadcast program.

**16.** An information processing method comprising the steps of:

acquiring registration count information about the number of registration information including identification information and time information, said identification information being included in and making identification of tags which represent emotions and which are designated by a user to be registered as representative of said emotions regarding a content, said time information being indicative of times at which said user designates the registration of said tags; and

controlling, based on said registration count information, display of icons expressing the emotions represented by the tags identified by said identification information;

inside a display area defined by a first axis representing times and by a second axis representing the number of said registration information; in positions defined by the positions on said first axis representing predetermined times and by the position on said second axis representing the number of said registration information having the same identification information from among said registration information having said time information indicating the times included in a predetermined unit time covering said predetermined times.

17. A program for causing a computer to function as an information processing apparatus comprising:

acquiring means for acquiring registration count information about the number of registration information including identification information and time information, said identification information being included in and making identification of tags which represent emotions and which are designated by a user to be registered as representative of said emotions regarding a content, said time information being indicative of times at which said user designates the registration of said tags; and

display controlling means for controlling, based on said registration count information, display of icons expressing the emotions represented by the tags identified by said identification information;

inside a display area defined by a first axis representing times and by a second axis representing the number of said registration information; in positions defined by the positions on said first axis representing predetermined times and by the position on said second axis representing the number of said registration information having the same identification information from among said registration information having said time information indicating the times included in a predetermined unit time covering said predetermined times.

EP 2 129 120 A1

# FIG.1

30

# F I G . 2

**STORAGE SECTION** 32

- TAG DATA 41
- REGISTERED TAG DATA 42
- REGISTERED TAG COUNT DATA 43

OPERATION INPUT SECTION 31

SELECTION SECTION 51

RECEPTION CONTROL SECTION 71

COMMUNICATION SECTION 34

TRANSMISSION CONTROL SECTION 72

COMMUNICATION CONTROL SECTION 52

TAG DATA READ SECTION 54

REGISTERED TAG DATA WRITE/READ SECTION 56

TIME CODE ACQUISITION SECTION 55

REPRODUCTION CONTROL SECTION 53

DISPLAY CONTROL SECTION 57

DISPLAY SECTION 35

AUDIO OUTPUT CONTROL SECTION 58

AUDIO OUTPUT SECTION 36

VIBRATION CONTROL SECTION 59

VIBRATION SECTION 37

CONTROL SECTION 33

DRIVE 38

REMOVABLE MEDIA 39

CONTENT REPRODUCTION DEVICE 11

EP 2 129 120 A1

# FIG.3

| TAG ID | NAME | ICON IMAGE DATA | COLOR DATA | SOUND DATA | VIBRATION PATTERN DATA |
|---|---|---|---|---|---|

41

# FIG.4

EP 2 129 120 A1

| TAG ID | 001 | 002 | 003 | 004 | · · · |
|---|---|---|---|---|---|
| NAME | NICE | BAD | COOL! | UNCERTAIN | · · · |
| ICON IMAGE DATA | | | | | · · · |
| COLOR DATA | YELLOW | BLUE | GREEN | GREY | · · · |
| SOUND DATA | \<APPLAUSE\> | \<BOOING\> | \<WHISTLING\> | (NONE) | · · · |
| VIBRATION PATTERN DATA | PATTERN A | PATTERN B | PATTERN C | PATTERN D | · · · |

# FIG.5

| CONTENT ID | TIME CODE | TAG ID | USER ID |
|------------|-----------|--------|---------|

42

# FIG.6

| CONTENT ID | NO. OF REGISTERED TAGS WITH TAG ID=001 | NO. OF REGISTERED TAGS WITH TAG ID=002 | . . . | NO. OF REGISTERED TAGS WITH TAG ID=N |
|------------|------------|------------|-------|------------|

43

EP 2 129 120 A1

34

# FIG.7

# F I G . 8

```
( START THE PROCESS OF ATTACHING TAGS )
                    │
                    ▼
┌─────────────────────────────────┐
│ SELECT CONTENT TO WHICH TO      │ S11
│ ATTACH TAGS                     │
└─────────────────────────────────┘
                    │
                    ▼
┌─────────────────────────────────┐
│ READ CONTENT DATA OF            │ S12
│ SELECTED CONTENT                │
└─────────────────────────────────┘
                    │
                    ▼
┌─────────────────────────────────┐
│ START REPRODUCING CONTENT       │ S13
└─────────────────────────────────┘
                    │
                    ▼
┌─────────────────────────────────┐
│ START MOVING POINTER INDICATING │ S14
│ TIME CODE ALONG TIMELINE        │
└─────────────────────────────────┘
                    │
                    ▼
              S15
         ◇ IS
    CONTENT REPRODUCTION      NO
         TERMINATED?  ──────────►
              │                    S16
            YES               ◇ IS TAG
              │         DESIGNATED TO BE        NO
              │              ATTACHED?  ──────────►
              │                    │
              │                  YES
              │                    ▼
              │    ┌────────────────────────────────┐
              │    │ READ TAG DATA OF DESIGNATED DATA│ S17
              │    └────────────────────────────────┘
              │                    │
              │                    ▼
              │    ┌────────────────────────────────┐
              │    │ ACQUIRE TIME CODE OF CONTENT    │ S18
              │    │ BEING REPRODUCED                │
              │    └────────────────────────────────┘
              │                    │
              │                    ▼
              │    ┌────────────────────────────────┐
              │    │ STORE TIME CODE OF CONTENT AND  │ S19
              │    │ TAG ID OF TAG DATA IN ASSOCIATION│
              │    │ WITH ONE ANOTHER                │
              │    └────────────────────────────────┘
              │                    │
              │                    ▼
              │    ┌────────────────────────────────┐
              │    │ DISPLAY ICON CORRESPONDING TO   │ S20
              │    │ TAG DESIGNATED TO BE ATTACHED,  │
              │    │ IN POINTER-INDICATED POSITION   │
              │    │ ALONG TIMELINE                  │
              │    └────────────────────────────────┘
              ▼
          ( END )
```

EP 2 129 120 A1

# FIG.9

# FIG.10

# FIG.11

( START THE PROCESS OF REPRODUCING CONTENT )

| SELECT CONTENT TO BE REPRODUCED | S31

| READ CONTENT DATA AND REGISTERED TAG DATA OF SELECTED CONTENT | S32

| DISPLAY ICONS CORRESPONDING TO TAGS ATTACHED TO CONTENT | S33

| START REPRODUCING CONTENT | S34

| START MOVING POINTER INDICATING TIME CODE ALONG TIMELINE | S35

S36
IS CONTENT REPRODUCTION TERMINATED?

NO

YES

S37
IS THERE REGISTERED TAG DATA HAVING TIME CODE CORRESPONDING TO CURRENT TIME?

NO

YES

| OUTPUT SOUND AND GENERATE VIBRATIONS BASED ON TAG DATA CORRESPONDING TO REGISTERED TAG DATA | S38

S39
HAS PREDETERMINED TIME PERIOD ELAPSED?

NO

YES

( END )

# FIG.12

EP 2 129 120 A1

# FIG.13

EP 2 129 120 A1

# FIG.14

191A    191B

0        $t_A$   $t_B$                    T

EP 2 129 120 A1

# FIG.15

REPRODUCE

212

211

231

233    232

# FIG.16

# FIG.17

# FIG.18

EP 2 129 120 A1

## F I G . 1 9

| TAG ID | NAME | ICON IMAGE DATA | COLOR DATA | SOUND DATA | VIBRATION PATTERN DATA |
|--------|------|-----------------|------------|------------|------------------------|
|        |      |                 |            |            |                        |

## F I G . 2 0

| REGION INFORMATION | CHANNEL INFORMATION | TIME INFORMATION | TAG ID | USER ID |
|--------------------|---------------------|------------------|--------|---------|
|                    |                     |                  |        |         |

47

# FIG.21

NO. OF REGISTERED TAGS PER TAG ID

| REGION INFORMATION | CHANNEL INFORMATION | UNIT TIME INFORMATION | NO. OF REGISTERED TAGS WITH TAG ID=001 | NO. OF REGISTERED TAGS WITH TAG ID=002 | . . . | NO. OF REGISTERED TAGS WITH TAG ID=N |
| --- | --- | --- | --- | --- | --- | --- |

# FIG.22

TAG MANAGEMENT SERVER

1012

1091 CPU

1092 ROM

1093 RAM

1094

1095 INPUT/OUTPUT INTERFACE

INPUT SECTION 1096

OUTPUT SECTION 1097

STORAGE SECTION 1098

COMMUNICATION SECTION 1099

DRIVE 1100

REMOVABLE MEDIUM 1101

# FIG.23

RECEPTION CONTROL SECTION ~1111

REGISTERED TAG COUNT TOTALING SECTION ~1112

TRANSMISSION CONTROL SECTION ~1113

TAG MANAGEMENT SERVER

1012

# FIG.24

2007/2/10 (SAT)    TOKYO
10:24    081   ch

point

10:00  :10  :20  :30  :40  :50  11:00

1154

081 ch

MEMU

1152  1131

1151

1153

1155

# FIG.25

```
┌─────────────────────┐                    ┌──────────────────────────┐
│  START THE PROCESS  │                    │ START THE PROCESS OF TOTALING │
│  OF REGISTERING TAGS │                    │ REGISTERED TAG COUNTS    │
└─────────┬───────────┘                    └────────────┬─────────────┘
          │                                             │
┌─────────▼───────────────────────────┐ S511           │
│ SELECT REGION AND CHANNEL IN AND ON WHICH │            │
│ CONTENT SUBJECT TO TAG REGISTERATION IS │              │
│ BROADCAST                             │                │
└─────────┬───────────────────────────┘                 │
┌─────────▼───────────────────────────┐ S512            │
│ DISPLAY TAG DISPLAY WINDOW CORRESPONDING │              │
│ TO SELECTED REGION AND CHANNEL        │               │
└─────────┬───────────────────────────┘                 │
┌─────────▼───────────────────────────┐ S513            │
│ START MOVING POINTER ALONG TIME BASE │                 │
└─────────┬───────────────────────────┘                 │
          │                                              │
   ┌──────▼──────┐ S514                                  │
NO │   IS TAG    │                                       │
◄──│ DESIGNATED TO BE │                                  │
   │ REGISTERED? │                                       │
   └──────┬──────┘                                       │
        YES│                                             │
┌──────────▼──────────┐ S515                             │
│ READ DESIGNATED TAG │                                  │
└──────────┬──────────┘                                  │
┌──────────▼──────────────────────┐ S516                 │
│ ACQUIRE TIME INFORMATION INDICATING │                  │
│ TIME AT WHICH TAG WAS DESIGNATED TO │                  │
│ BE REGISTERED                    │                     │
└──────────┬──────────────────────┘                      │
┌──────────▼──────────────────────┐ S517                 │
│ GENERATE REGISTERED TAG DATA BASED │                   │
│ ON REGION INFORMATION, CHANNEL   │                     │
│ INFORMATION, TIME INFORMATION, AND │                   │
│ TAG ID OF TAG                    │                     │
└──────────┬──────────────────────┘                      │
           │                                              │
    ┌──────▼──────┐ S518                                  │
    │ HAS UNIT    │ NO                                    │
    │ TIME ELAPSED? │───►                                 │
    └──────┬──────┘                                       │
        YES│                                              │
┌──────────▼──────────┐ S519                              │
│ GENERATE REGISTERED TAG COUNT │                         │
│ DATA WITHIN UNIT TIME │                                 │
└──────────┬──────────┘                                   │
┌──────────▼──────────┐ S520                              │
│ TRANSMIT REGISTERED TAG COUNT │                         │
│ DATA TO TAG MANAGEMENT SERVER │─ ─ ─ ─ ─ ─►             │
└──────────┬──────────┘                    ┌─────────────▼───────────┐ S531
┌──────────▼──────────┐ S521               │ RECEIVE REGISTERED TAG COUNT DATA │
│ RECEIVE REGISTERED TAG COUNT DATA │◄─ ─ ─ └─────────────┬───────────┘
│ COMING FROM OTHER USERS │                 ┌─────────────▼───────────┐ S532
└──────────┬──────────┘                     │ FOR EACH TAG ID, TOTAL NUMBERS OF │
┌──────────▼──────────────────────┐ S522    │ TAGS DESIGNATED TO BE REGISTERED │
│ DISPLAY ICONS CORRESPONDING TO TAGS │      │ AT THE SAME TIME        │
│ IN POSITIONS DEFINED BY CURRENT-TIME │     └─────────────┬───────────┘
│ POSITION ON TIME BASE AND BY      │       ┌─────────────▼───────────┐ S533
│ POSITIONS ON VERTICAL AXIS        │       │ FROM TOTALED NUMBERS OF │
│ CORRESPONDING TO NUMBERS OF TAGS  │       │ REGISTERED TAG, ACQUIRE AND │
│ DESIGNATED TO BE REGISTERED BY THIS │     │ TRANSMIT REGISTERED TAG COUNT │
│ USER AND BY OTHER USERS           │       │ DATA COMING FROM OTHER USERS │
└───────────────────────────────────┘       └─────────────────────────┘
```

# FIG.26

2007/2/10 (SAT)  TOKYO
10:50    081  ch

point

1153

10:00  :10  :20  :30  :40  :50  11:00

1154

1151

081 ch

1152    1131  1155

MEMU

TARO    HANAKO    MIKA
081ch   051ch     081ch

# FIG.27

2007/2/10 (SAT)   TOKYO
10:50   081  ch

point

1153

10:00   :10   :20   :30   :40   :50   11:00
1154

△ 1151
081 ch

○ ⊗ 😎 😮 MEMU

Login 3/5 (THE SAME CHANNEL/ALL MEMBERS) 1152   1131   1155

GREETINGS!

TARO   HANAKO   MIKA   HIDE   MAMORU
081ch   051ch   081ch   081ch   010ch

**INTERNATIONAL SEARCH REPORT**

| | International application No. |
|---|---|
| | PCT/JP2008/050750 |

A. CLASSIFICATION OF SUBJECT MATTER
*H04N7/173(2006.01)i, H04N5/91(2006.01)i*

According to International Patent Classification (IPC) or to both national classification and IPC

B. FIELDS SEARCHED

Minimum documentation searched (classification system followed by classification symbols)
H04N7/173, H04N5/91

Documentation searched other than minimum documentation to the extent that such documents are included in the fields searched
Jitsuyo Shinan Koho          1922-1996   Jitsuyo Shinan Toroku Koho   1996-2008
Kokai Jitsuyo Shinan Koho    1971-2008   Toroku Jitsuyo Shinan Koho   1994-2008

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2005-295266 A  (Victor Company Of Japan, Ltd.), 20 October, 2005 (20.10.05), Par. Nos. [0011], [0020], [0027] to [0035] (Family: none) | 1-9 |
| X | JP 2003-283981 A  (Nippon Telegraph And Telephone Corp.), 03 October, 2003 (03.10.03), Par. Nos. [0050], [0040], [0202] (Family: none) | 1-9 |
| X | JP 2004-193979 A  (Canon Inc.), 08 July, 2004 (08.07.04), Par. Nos. [0045], [0121], [0138], [0153] to [0167] (Family: none) | 1-9 |

☐ Further documents are listed in the continuation of Box C.    ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 21 April, 2008 (21.04.08) | 01 May, 2008 (01.05.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

| International application No. |
| --- |
| PCT/JP2008/050750 |

---

**Box No. II     Observations where certain claims were found unsearchable (Continuation of item 2 of first sheet)**

This international search report has not been established in respect of certain claims under Article 17(2)(a) for the following reasons:

1. ☐ Claims Nos.:

   because they relate to subject matter not required to be searched by this Authority, namely:

2. ☒ Claims Nos.: 11-15

   because they relate to parts of the international application that do not comply with the prescribed requirements to such an extent that no meaningful international search can be carried out, specifically:

   Claims 11-15 are described by referring to claim 1 or 3. However, the technical features described in claims 11-15 does not correspond to the technical feature described in claim 1 or 3.
   (Continued to extra sheet)

3. ☐ Claims Nos.:

   because they are dependent claims and are not drafted in accordance with the second and third sentences of Rule 6.4(a).

---

**Box No. III     Observations where unity of invention is lacking (Continuation of item 3 of first sheet)**

This International Searching Authority found multiple inventions in this international application, as follows:

   The inventions of claims 1-9 stores tag information and time information while correlating them to each other when an instruction of tag addition is received.
   The inventions of claims 10, 16-17 relate to display control according to the registration quantity information.
   These groups of inventions are not united into one invention nor so linked as to form a single general inventive concept.

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☒ No required additional search fees were timely paid by the applicant.   Consequently, this international search report is restricted to the invention first mentioned in the claims; it is covered by claims Nos.: 1-9

**Remark on Protest**
the

☐ The additional search fees were accompanied by the applicant's protest and, where applicable, payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2007)

EP 2 129 120 A1

**INTERNATIONAL SEARCH REPORT**

International application No.

PCT/JP2008/050750

Continuation of Box No.II-2 of continuation of first sheet(2)

Accordingly, it is impossible to identify any invention of claims 11-15 as an invention on which a meaningful search can be performed.

Form PCT/ISA/210 (extra sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006317872 A